(19) Europäisches Patentamt / European Patent Office / Office européen des brevets

(11) **EP 3 485 202 B1**

(12) **EUROPEAN PATENT SPECIFICATION**

(45) Date of publication and mention of the grant of the patent:
**30.07.2025 Bulletin 2025/31**

(21) Application number: **17827102.9**

(22) Date of filing: **14.07.2017**

(51) International Patent Classification (IPC):
*F24F 11/00* (2018.01)    *F28F 27/00* (2006.01)
*F28F 25/10* (2006.01)    *F24F 11/46* (2018.01)

(52) Cooperative Patent Classification (CPC):
**F24F 11/54; F24F 11/46; F24F 11/62; F24F 11/85;
G05B 13/0265; G05B 15/02;** G05B 2219/2642

(86) International application number:
**PCT/IB2017/054273**

(87) International publication number:
**WO 2018/011761 (18.01.2018 Gazette 2018/03)**

(54) **METHOD FOR IMPROVING OPERATIONAL EFFICIENCY OF A COOLING SYSTEM THROUGH RETROFITTING A BUILDING WITH A MASTER CONTROLLER**

VERFAHREN ZUR VERBESSERUNG DER BETRIEBSEFFIZIENZ EINES KÜHLSYSTEMS DURCH NACHRÜSTUNG EINES GEBÄUDES MIT EINEM HAUPTSTEUERGERÄT

PROCÉDÉ DE PERFECTIONNEMENT D'EFFICACITÉ OPÉRATIONNELLE DE SYSTÈME DE REFROIDISSEMENT PAR RÉNOVATION DE BÂTIMENT AU MOYEN D'UN DISPOSITIF CENTRAL DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2016 SG 10201605828U**

(43) Date of publication of application:
**22.05.2019 Bulletin 2019/21**

(73) Proprietor: **Barghest Building Performance Pte. Ltd.
Singapore 089762 (SG)**

(72) Inventor: **CHALLA, Venu Kumar
Singapore 520414 (SG)**

(74) Representative: **Schweiger, Martin
Patentanwalt
Martin Schweiger
Erhardtstraße 12
80469 München (DE)**

(56) References cited:
EP-A1- 0 895 038        KR-B1- 100 750 258
US-A- 6 085 532         US-A1- 2011 137 468
US-A1- 2011 137 468     US-A1- 2012 078 424
US-A1- 2013 167 560     US-A1- 2015 052 919
US-A1- 2015 219 093     US-A1- 2015 292 514

**Description**

The application relates to a Heating, Ventilating, and Air Conditioning (HVAC) system for a building.

US 8,660, 702 B2 shows a central cooling and circulation energy management control system which includes an energy management controller device, a central cooling system, and associated methods, according to various embodiments. A central cooling energy management controller device includes one or more signal connections, one or more electronic memory elements, and one or more processors. The controller device has access to resources that are either stored on the electronic memory elements or are accessible via the signal connections.

US 2012/0271462 A1 and WO 2010/051466 A1 show controller which is configured to exchange information with a building automation system and includes various executable programs for determining a real time operating efficiency, simulating a predicted or theoretical operating efficiency, comparing the same, and then adjusting one or more operating parameters on equipment utilized by a building's HVAC system. The controller adjusts an operating efficiency of the HVAC system. An adjustment module utilized by the controller may modify the HVAC equipment parameters based on the likelihood that Various HVAC equipment operates in parallel and on-line near its natural operating curve. The adjustment module includes a self-learning aspect that permits the controller to more efficiently make similar, future adjustments as needed.

US6085532A shows a method of controlling chiller capacity in a chiller system. The method comprises the steps of measuring entering the fluid temperature of a fluid entering a heat exchanger and measuring the fluid temperature of the fluid leaving the heat exchanger. The method also includes determining a desired leaving fluid temperature, establishing chiller capacity as a function of the difference between leaving fluid temperature and the desired leaving fluid temperature, and adjusting the determined chiller capacity as a function of the difference between the entering fluid temperature and the desired leaving fluid temperature.

US2011/137468A1 shows a cooling system for providing conditioned air to a facility. It includes a chiller or other cooling subsystem, a cooling tower subsystem, and one or more air handling units or process cooling units.

It is an object of the application to provide a Heating, Ventilating, and Air Conditioning (HVAC) arrangement with an improved operation.

The object is solved by the subject matter of the independent claims. The dependent claims are directed to embodiments of advantage.

The application provides a method of operating a Heating, Ventilating, and Air Conditioning (HVAC) arrangement for a building. The building can refer to a structure, such as house, with a roof and walls.

The HVAC arrangement comprises an Air Handling Unit (AHU) loop, a cooling tower loop, at least one chiller, and a Master Controller (MC). The AHU loop is also called a chilled water loop. The cooling tower loop is also called a condenser water loop.

The AHU loop comprises at least one Air Handling Unit (AHU) with at least one electric chilled water pump, and with at least one AHU electric fan. The AHU electric fan is intended for supplying air to the building from the AHU. Cooling water is circulating in the AHU loop. By adjusting speed of the chilled water pump, one can adjust a flow rate of the cooling water. The chilled water pump would generally consume more electric energy at higher speed. A speed of the AHU electric fan can also be changed to adjust, that is increase or decrease, the flow rate of air through the AHU.

Referring to the cooling tower loop, it comprises at least two cooling towers. Each cooling tower includes at least one electric fan with at least one condenser water pump, wherein condenser water is circulating in the cooling tower loop.

Referring to the chiller, it comprises an evaporator, an electric compressor, a condenser, an expansion valve, and a refrigerant. These parts form a thermodynamic refrigeration cycle. The thermodynamic refrigeration cycle is also called a refrigeration cycle. The chiller interconnects with the AHU loop and with the cooling tower loop for transferring heat from the cooling water to the condenser water. This is done without the refrigerant mixing with the cooling water and without the refrigerant mixing with the condenser water. In short, the refrigerant, the cooling water, and the condenser water are isolated from each other.

Referring to the MC, it is provided for automatically controlling the speed of the electric chilled water pump, the speed of the cooling tower electric fan, the speed of the AHU electric fan, the speed of the condenser water pump and a position of an AHU modulating valve.

The method includes a combination of several strategies.

The first strategy includes a step of the MC changing speed of the electric chilled water pump. This is done such that a temperature of return chilled water does not exceed a predetermined upper limit of return chilled water temperature and such that a delta T value of the chilled water does not exceed a predetermined thermal comfort delta T limit.

The second strategy includes a step of the MC changing speed of the electric condenser water pump such that a temperature of return condenser water does not exceed a predetermined upper limit of return condenser water temperature and such that a delta T value of the condenser water does not exceed a predetermined delta T limit.

The third strategy includes a step of the MC selecting a number of active cooling towers. The MC then activates the respective cooling towers. This activation acts to open isolation water valves of the respective cooling towers for fluidically connecting the cooling towers to the cooling tower loop. This then allows condenser water to flow through these cooling towers. Speed of the respective cooling tower fan is afterward adjusted.

The steps of each strategy, which are mentioned above, are done to provide an essentially balanced state of heat transport rate from the AHU to the cooling tower, and are done such that the same heat transport rate is maintained for providing the same thermal comfort while maintaining essentially the same cooling load, wherein overall energy consumption is reduced.

These strategies have a benefit of providing an effective manner of supporting the cooling load. Each strategy acts to improve efficiencies of parts of the HVAC arrangement. Together, these strategies work together to support the same cooling load with lower energy consumption.

The method can include several additional strategies, which are described below.

The method can include a further strategy. The strategy comprises a step of removing water flow restrictions in the AHU loop by a user manually opening fully one or more water valves in the AHU loop with a step of the MC reducing the speed of the corresponding electric chilled water pump.

In one implementation, the method includes another strategy. The strategy includes a step of removing water flow restrictions in the cooling tower loop by a user manually opening fully one or more water valves in the cooling tower loop with the MC reducing the speed of the corresponding electric condenser water pump.

The method can also include another strategy, which includes a step of the MC adjusting a position of a water valve of the AHU for changing a flow rate of water in the AHU with adjusting speed of the at least one electric AHU fan to provide a desired user thermal comfort with reduced energy consumption.

Furthermore, the method can also include a further strategy, the strategy includes a step of the MC selecting a number of active electric chilled water pumps. The MC then activates the respective electric chilled water pumps. Respective speed of these active electric chilled water pumps is subsequently adjusted.

The method can also include another strategy, which includes s step of the MC selecting a number of active electric condenser water pumps. The MC then activates these electric condenser water pumps and adjusts their respective speed.

The method can also include a strategy, which includes a step of the MC adjusting speed of the cooling tower fan depending on ambient conditions, for change supply condenser water temperature, for reducing total energy consumption of the cooling tower fan and of the electric compressor in the chiller.

The electric chilled water pump, the electric AHU fan, the electric cooling tower fan, and the electric condenser water pump are often operated within predetermined boundary conditions. These boundary conditions can be provided by respective manufacturers of these parts.

The application provides a Master Controller (MC) for operating a Heating, Ventilating, and Air Conditioning (HVAC) arrangement for a building.

The MC includes several interfaces for at least one electric chilled water pump and for at least one electric Air Handling Unit (AHU) fan of an AHU loop of the HVAC arrangement, and for at least one electric cooling tower fan and for at least one electric condenser water pump of a cooling tower loop of the HVAC arrangement.

The MC is adapted to issue control signals to the interfaces for controlling said electric chilled water pump, said electric AHU fan, said electric cooling tower fan, and said electric condenser water pump.

The MC is also adapted to perform automatically the steps of a method according to any one the above-mentioned claims such that the aforementioned steps are provided in a balanced state of heat transport rate from the AHU to the cooling tower, and such that the same heat transport rate from the AHU to the chiller is maintained, while overall energy consumption is reduced.

In effect, the HVAC arrangement allows reduction of energy consumption while maintaining heat transfer between the AHU and the chiller (which supports cooling load). This in turn provides improvement of efficiency, which often reduces power consumption of the chiller, thereby reducing total heat transfer.

The MC can be adapted such that at least two electric chilled water pumps are provided.

The MC can also be adapted such that at least two electric condenser water pumps are provided.

Put differently, the application provides a method of operating a Heating, Ventilating, and Air Conditioning (HVAC) arrangement for a building.

The HVAC arrangement comprises an Air Handling Unit (AHU) loop, a cooling tower loop, and an active chiller. The AHU loop is also called a chilled water loop. The cooling tower loop is also called a condenser water loop. The active chiller is interconnected to the AHU loop and to the cooling tower loop such that heat is transferred from the cooling water to the condenser water, without any mixing among fluid in the AHU loop, fluid in the chiller and fluid in the cooling tower loop. In short, these fluids are isolated from each other.

The AHU loop comprises at least one AHU and at least one electric chilled water pump, wherein cooling water is circulating in the AHU loop. By adjusting the speed of the chilled water pump, one can adjust the cooling water flow rate in the AHU loop. A higher speed of the chilled water pump consumes more electric energy than a lower speed of the chilled water pump.

The AHU comprises at least one AHU valve as well as at least one AHU fan unit. The position of the AHU valve can be changed according to temperature of air leaving the AHU or of air returning to the AHU. The speed of the fan unit can be changed to increase or decrease the flow of air through the AHU.

The cooling tower loop comprises at least one cooling tower with at least one electric fan and at least one condenser water pump, wherein condenser water is circulating in the cooling tower loop.

The chiller comprises an evaporator, an electric compressor, a condenser, an expansion valve, and a coolant, which form a thermodynamic refrigeration cycle. The thermodynamic refrigeration cycle is also called a refrigeration cycle. The chiller interconnects the AHU loop and the cooling tower loop such that heat is transferred from the cooling water to the condenser water.

A Master Controller (MC) is provided for automatically controlling the at least one electric chilled water pump, the at least one electric fan, and the at least one condenser water pump.

According to the application, in an essentially balanced state of the HVAC arrangement, the heat transport rate from the AHU to the cooling tower is essentially constant, providing a predetermined thermal comfort in the vicinity of the AHU. In order to save electrical energy, the MC reduces the speed of the at least one electric chilled water pump such that essentially the same heat transport rate is maintained, thereby providing the same thermal comfort by maintaining essentially the same cooling load. The MC maintains the speed of the chilled water pump within a predetermined range of chilled water pump boundary conditions, such that operation of the chilled water pump within its specification is provided.

The application further provides a step for removing cooling water flow restrictions in the AHU loop. This can be done manually by opening fully electric valves or manual valve, which are present in the AHU loop.

In HVAC arrangements with two or more electric chilled water pumps, the MC selects the number of active electric chilled water pumps and adjusts their respective speed in an essentially balanced state of heat transport rate from the AHU to the cooling tower such that essentially the same heat transport rate is maintained. This provides further energy savings, if the friction of the cooling water in the AHU loop is lower for two pumps that run at lower speeds as compared with one single pump that runs at a higher speed. The MC would still maintain the speeds of the active chilled water pumps within a predetermined range of chilled water pump boundary conditions. This provides an automatic step of changing the number and the speed of the cooling water pumps for providing essentially the same water flow rate.

In a further embodiment of the specification, a user manually removes cooling water flow restrictions in the AHU loop and the MC reduces the speed of the at least one electric chilled water pump. The user can also manually remove cooling water flow restrictions in the cooling tower loop and the MC then reduces the speed of the at least one electric condenser water pump. This provides savings of electrical energy, while essentially maintaining the same heat transport rate between the chiller and the AHU.

If two electric chilled water pumps are provided, the MC can select the number of active electric chilled water pumps and adjusts their respective speed, such that electrical energy is saved, while essentially the same heat transport rate between the chiller and the AHU is maintained.

In a very specific case, at least two electric condenser water pumps are provided, and the MC selects the number of active electric condenser water pumps and adjusts their respective speed accordingly.

The MC can maintain the speed of all the water pumps within a predetermined range of water pump boundary conditions, such that operation of the respective water pump within its specification is provided. The same applies for the cooling tower fans which are electrically driven.

The Master Controller (MC) according to the specification is therefore adapted to issue control signals for controlling at least one electric chilled water pump, at least one electric fan, and at least one condenser water pump to the interfaces. In other words, the MC is adapted to reduce the speed of at least one electric chilled water pump such that, as compared with an essentially balanced state of a HVAC arrangement, essentially the same heat transport rate is maintained, while operating maintaining the speed of the chilled water pump within a predetermined range of chilled water pump boundary conditions. When two electric chilled water pumps are provided, the MC is adapted to select the number of at least two active electric chilled water pumps and to adjust their respective speed. The MC maintaining the speed of the active chilled water pumps within a predetermined range of chilled water pump boundary conditions.

Fig. 1    illustrates an improved air cooling and circulating arrangement for a building that includes a Building Management System (BMS) and an energy control module,

Fig. 2    illustrates parts of a chiller of the air cooling and circulating arrangement of Fig. 1,

Fig. 3    illustrates another air cooling and circulating arrangement with a further energy control module, which is a variant of the energy control module of Fig. 1,

Fig. 4    illustrates a further air cooling and circulating arrangement with an energy control module being connected to a cloud-based computer,

Fig. 5    illustrates a further enhanced air cooling and circulating arrangement, which is a variant of the air cooling and circulating arrangement of Fig. 1,

Fig. 6    illustrates an example of system curves of a water flow system with a modulating water valve and an exam-

EP 3 485 202 B1

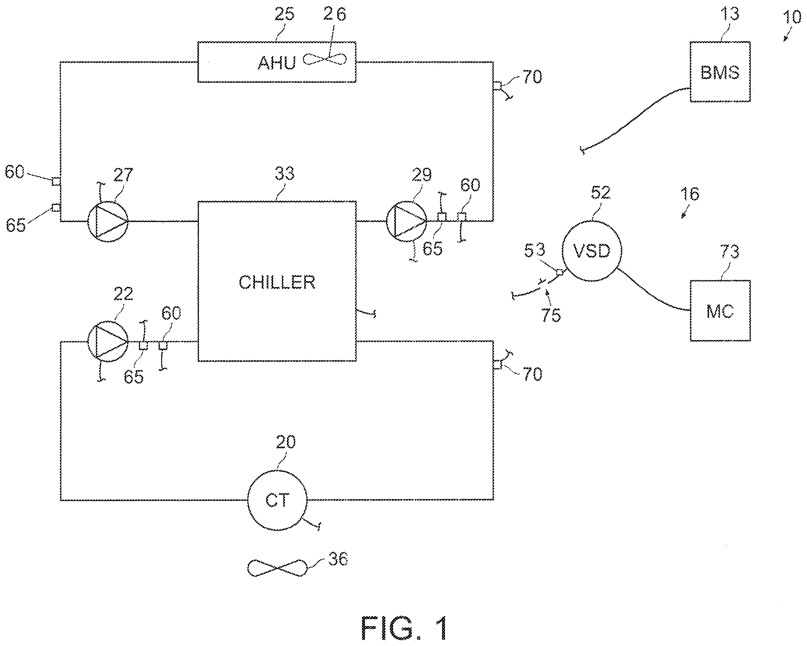

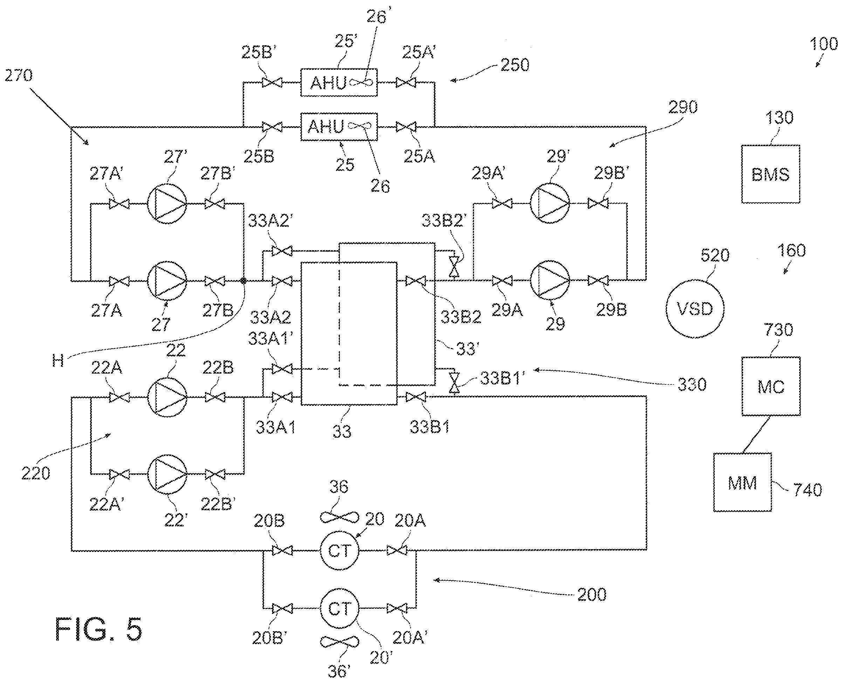

ple of performance curves of a water pump for the air cooling and circulating arrangement of Figs. 1 and 5, and

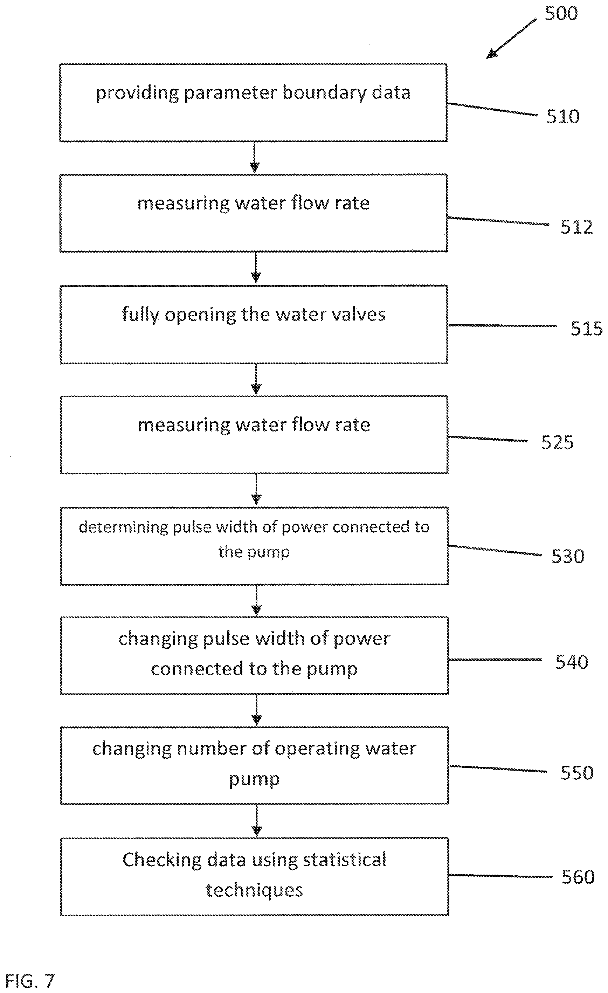

Fig. 7      illustrates a flow chart of a method of operating the air cooling and circulating arrangement of Fig. 5.

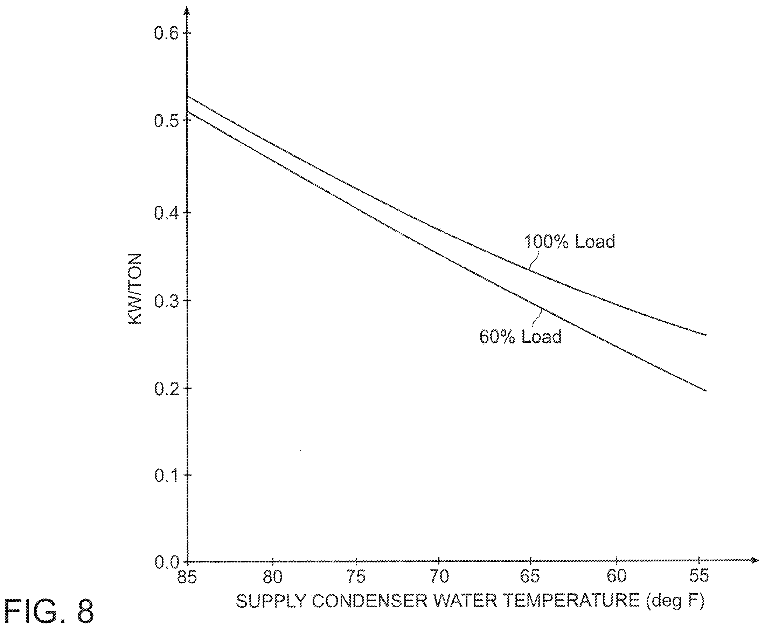

Fig. 8      illustrates a graph of a relationship between chiller efficiency and condenser water temperature for the air cooling and circulating arrangement of Fig. 5,

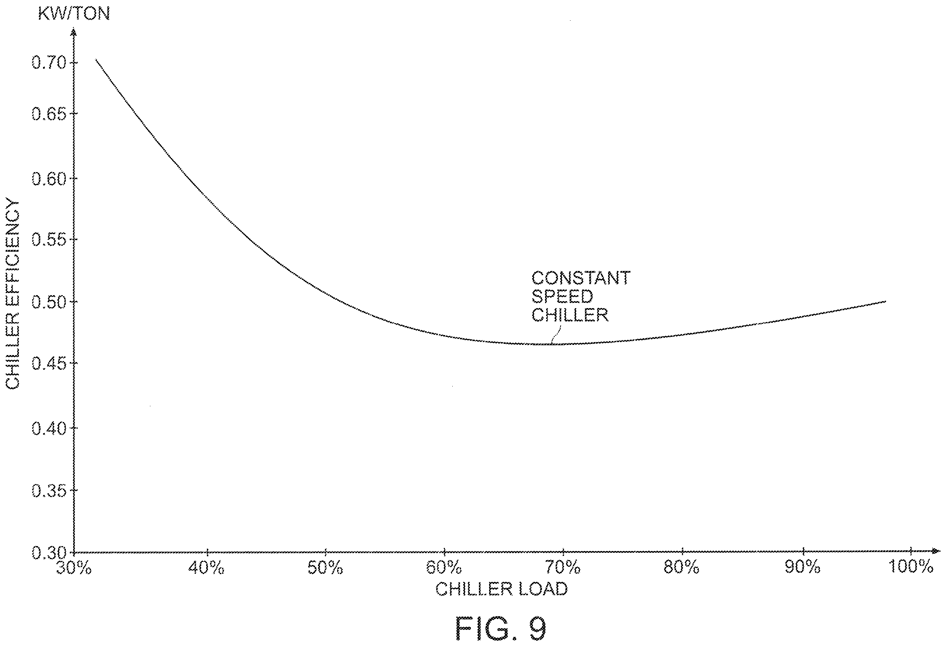

Fig. 9      illustrates graphs of a relationship between chiller efficiency and chiller load for the air cooling and circulating arrangement of Fig. 5, and

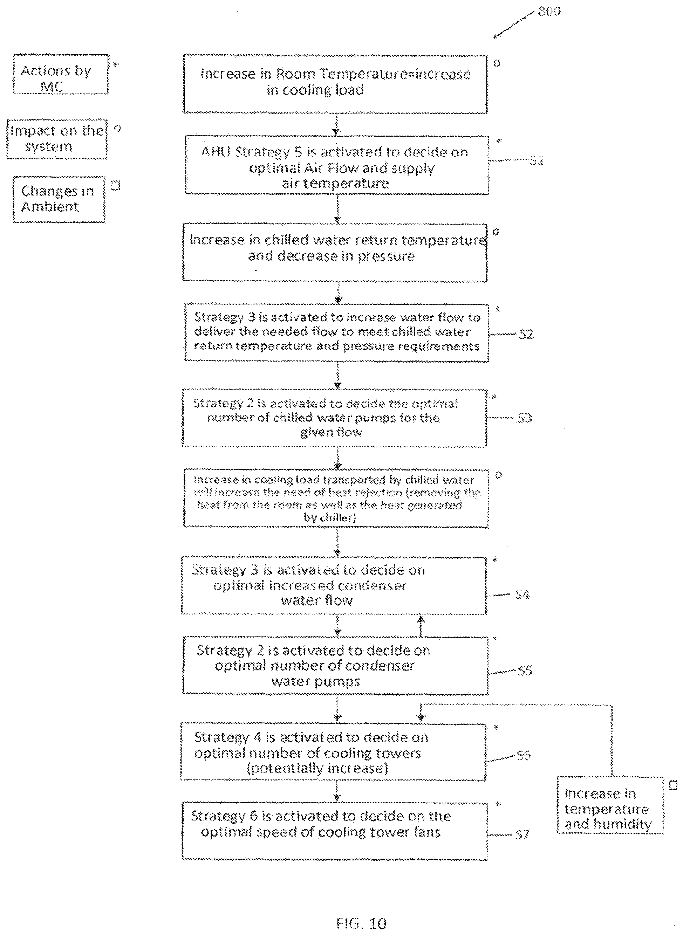

Fig. 10      illustrates a flow chart of a method of operating the air cooling and circulating arrangement of Fig. 5.

In the following description, details are provided to describe embodiments of the application. It shall be apparent to one skilled in the art, however, that the embodiments may be practiced without such details.

Some embodiments have similar parts. The similar parts may have the same names or similar part reference numerals with an alphabet or prime symbol. The description of one similar part also applies by reference to another similar part, where appropriate, thereby reducing repetition of text without limiting the invention, the scope of the invention being defined by the claims.

Fig. 1 shows an air cooling and circulating arrangement 10 for a building, with a Building Management System (BMS) 13 and with an energy control module 16. The air cooling and circulating arrangement 10 is electrically connected to the energy control module 16 and to the BMS 13. The building is not shown in Fig. 1. The BMS 13 is also called a Building Automation System (BAS).

The air cooling and circulating arrangement 10 includes a cooling tower 20 with a condenser water pump 22, an Air Handling Unit (AHU) 25 with a supply chilled water pump 27 and with a return chilled water pump 29, and a chiller 33. The cooling tower 20 comprises one or more fans 36. The supply chilled water pump 27 is also called a primary chilled water pump while the return chilled water pump 29 is also called a secondary chilled water pump.

The cooling tower 20 is fluidically connected to the condenser water pump 22 by a condenser water pipe, which is fluidically connected to the chiller 33 by another condenser water pipe. The chiller 33 is fluidically connected to the cooling tower 20 by a further condenser water pipe. The water pump 22 circulates condensed water between the chiller 33 and the cooling tower 20.

The AHU 25 is fluidically connected to the supply chilled water pump 27 by a chilled water pipe. The supply chilled water pump 27 is fluidically connected to the chiller 33 by another chilled water pipe. The chiller 33 is fluidically connected to the return chilled water pump 29 by a further chilled water pipe. The return chilled water pump 29 is fluidically connected to the AHU 25 by another chilled water pipe. The supply chilled water pump 27 and the return chilled water pump 29 circulate chilled water between the AHU 25 and the chiller 33.

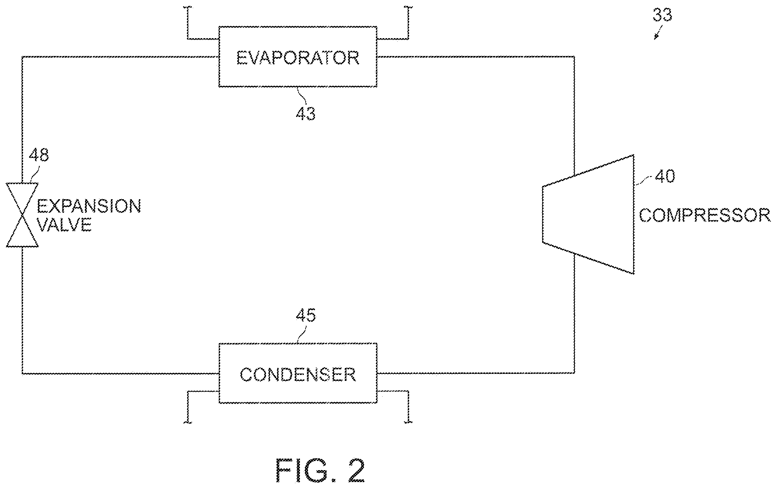

As can be seen in Fig. 2, the chiller 33 comprises a refrigerant compressor 40, an evaporator 43, a condenser 45, and an expansion valve 48.

The compressor 40, the evaporator 43, the condenser 45, and the expansion valve 48 are fluidically connected by a set of refrigerant pipes to form a refrigerant loop 49 that allows a refrigerant to circulate in a thermodynamic cycle. The refrigerant loop 49 is also called a thermodynamic refrigeration cycle.

The compressor 40 is fluidically connected to the condenser 45, which is fluidically connected to the expansion valve 48. The expansion valve 48 is fluidically connected to the evaporator 43. The evaporator 43 is fluidically connected to the compressor 40. The compressor 40, the condenser 45, the expansion valve 48, and the evaporator 43 contain a refrigerant, which can be in a form or a gas and/or liquid.

As can be seen Figs. 1 and 2, the chiller condenser 45 is fluidically connected to the condenser water pipes such that the cooling tower 20, the condenser water pump 22, and the chiller condenser 45 form a condenser water loop 50 that allows condenser water to circulate. The condenser water loop 50 is also called a cooling tower loop.

The chiller evaporator 43 is fluidically connected to the chilled water pipes such that the AHU 25, the supply chilled water pump 27 with the return chilled water pump 29, and the chiller evaporator 43 form a chilled water loop 51 that allows chilled water to circulate. The chilled water loop 51 is also called an AHU loop.

The supply chilled water pump 27 and the return chilled water pump 29 are adapted for circulating chilled water between the AHU 25 and the chiller evaporator 43.

In another implementation, a de-coupler bypass pipe is installed for allowing water returning from the AHU 25 to bypass the supply chilled water pump 27 and the chiller 33 or for allowing water leaving the chiller 33 to bypass the AHU 25. The bypass pipe is sometimes fitted with a water valve.

The AHU 25 includes a fan 26 for supplying and distributing conditioned air to parts of the building and for returning the air back to the AHU 25.

Referring to the BMS 13, see seen in Fig. 1, it is adapted for activating and controlling electric motors of respective parts of the air cooling and circulating arrangement 10, such as pumps, fans, compressors, and water valves. The activation refers to supply of electrical energy.

In detail, the BMS 13 is electrically connected to the chiller compressor 40, to the condenser water pump 22, to the cooling tower fan 36, to the supply chilled water pump 27, and to the return chilled water pump 29 for activating these parts. The connection lines are not shown in Fig. 1 for simplicity.

In particular, the BMS 13 is electrically connected to the chiller compressor 40 via an interface module.

Referring to the energy control module 16, it includes a plurality of Variable Speed Drives (VSDs) 52 with corresponding electrical power meters 53, a parameter measurement module of the air cooling and circulating arrangement 10, and a master controller (MC) 73. Only one of the pluralities of VSDs 52 and one power meter 53 are shown in Fig. 1.

Different implementations of the VSDs are possible.

The VSDs 52 can include a Variable Frequency Drive (VFD), also called an adjustable-frequency drive for varying frequency pulse width of an electrical power supply of an electrical motor. The changed frequency pulse width then changes a speed of the electrical motor.

Alternatively, the VSDs 52 can include an inverter drive for varying frequency and/or voltage of an electrical power supply of an electrical motor. The changed frequency and/or voltage then change a speed of the electrical motor.

The power meter 53 measures electrical power consumption of the electrical motor.

The MC 73 is electrically connected to the VSDs 52 and to the power meters 53.

In one implementation, the MC 73 is electrically connected to the VSDs 52 via an electrical switch for selectively connecting the VSD 52 to the MC 73.

The MC 73 is also electrically connected to the parameter measurement module, which is connected to respective sensors of parts of the air cooling and circulating arrangement 10 by wires. The connection lines between the MC 73 and the parameter measurement module and between the parameter measurement module and the sensors are not shown Fig. 1 for simplicity.

In a special implementation, the sensors are connected to the parameter measurement module by wireless data transmission means, instead of wired electrical connections.

The parameter measurement module comprises a plurality of temperature sensors 60, a plurality of pressure sensors 65, and a plurality of flow meters 70.

Regarding the flow rate, the MC 73 is electrically connected to one or more flow meters 70 that are adapted for measuring the flow rate of the supply chilled water pump 27 or the flow rate of the return chilled water pump 29. In effect, this flow meter 70 that is adapted for measuring the rate of flow of fluid in the chilled water loop 51.

Similarly, the MC 73 is electrically connected to one or more flow meters 70 that are adapted for measuring the flow rate of the condenser water pump 22. In effect, this flow meter 70 is adapted for measuring the rate of flow of fluid in the condenser water loop 50.

Regarding the pressure, the MC 73 is electrically connected to one or more pressure sensors 65 that are adapted for measuring the pressure of the chilled water in the chilled water loop 51.

In detail, the MC 73 is electrically connected to one or more pressure sensors 65 that are adapted for measuring the pressure of the chilled water being supplied to the AHU 25. This water pressure acts to force the chilled water through the AHU 25. In other words, a low-pressure reading from said sensor 65 indicates that inadequate amount of the chilled water is flowing through the AHU 25.

Very often, at the same time, the MC 73 also takes measurements from pressure sensors 65 of water returning from the AHU 25 as well as from pressure sensors of water being supplied to the AHU 25, and from pressure sensors of air being supplied to the climate controlled spaces of a building (not shown here).

In a special situation, for example in a case of a system with water cooled packaged units, the MC 73 is electrically connected to one pressure sensor 65 that is adapted for measuring the pressure of the condenser water in the condenser water loop 50.

Regarding the temperature, the MC 73 is also electrically connected to one or more temperature sensors 60 that are adapted for measuring the temperature of the condenser water being supplied to the chiller 33.

The MC 73 is also electrically connected to one or more temperature sensors 60 that are adapted for measuring the temperature of the condenser water being returned from the chiller 33. The condenser water is flowing out of the chiller 33.

The MC 73 is also electrically connected to one or more temperature sensors 60 that are adapted for measuring the temperature of the chilled water being supplied from the chiller 33.

The MC 73 is also electrically connected to one or more temperature sensor 60 that are adapted for measuring the temperature of the chilled water being return to the chiller 33.

In a special implementation, the MC 73 is electrically connected to a temperature sensor that is adapted for measuring the temperature of air being supplied from the AHU 25 and the temperature of air returning to the AHU 25. The MC 73 is also connected to a temperature sensor that is adapted for measuring temperature of water being supplied to the AHU 25 and of water returning from the AHU 25.

With reference to the VSDs 52, they are adapted for adjusting frequency pulse width of corresponding electric motors of the respective parts of the air cooling and circulating arrangement 10. The adjusted pulse width, in turn, acts to change the speed of the electric motor and then changes the electrical energy consumption or energy consumption of the air cooling and circulating arrangement 10.

In a special implementation, the VSDs 52 are configured for changing voltage or frequency of the electric motor. The adjusted voltage or frequency, in turn, acts to change the speed of the electric motor and later changes the electrical energy consumption of the air cooling and circulating arrangement 10.

In detail, one VSD 52 is electrically connected to an electrical power supply of the cooling tower fan 36 to adjust speed of the cooling tower fan 36 while one power meter 53 measures electrical power consumption of the cooling tower fan 36.

One VSD 52 is electrically connected to an electrical power supply of the condenser water pump 22 to adjust speed of the condenser water pump 22 while one power meter 53 measures electrical power consumption of the condenser water pump 22.

One VSD 52 is electrically connected to an electrical power supply of the supply chilled water pump 27 to adjust speed of the supply chilled water pump 27 while one power meter 53 measures electrical power consumption of the supply chilled water pump 27.

One VSD 52 is electrically connected to an electrical power supply of the return chilled water pump 29 to adjust speed of the return chilled water pump 29 while one power meter 53 measures electrical power consumption of the return chilled water pump 29.

In a special embodiment, one VSD 52 is electrically connected to an electrical power supply of the chiller compressor 40 for adjusting speed of the chiller compressor 40 while one power meter 53 measures electrical power consumption of the chiller compressor 40.

In another embodiment not shown here, the air cooling and circulating arrangement 10 includes all of its parts with the exception of the return chilled water pump 29.

In a general sense, the air cooling and circulating arrangement 10 can also include more than one supply chilled water pump 27, or more than one return chilled water pump 29, or more than one condenser water pump 22, or more than one chiller 33, or more than one cooling tower 20.

If more than one supply chilled water pump 27 is provided, the supply chilled water pumps 27 can be fluidically connected in parallel, wherein each supply chilled water pump 27 is activated and be deactivated by the BMS 13 and/or the MC 73.

In detail, an inlet, and/or an outlet of the supply-chilled water pump 27 is fluidically connected to a corresponding water valve.

In a general sense, the water valve can be actuated by an electric motor, be actuated manually by a user, or be positioned or calibrated in a factory.

The water valve can be actuated or be positioned to constrict or adjust or to block a flow of water through the water valve. The water valve can have a fully closed state, a fully open state, and/or several partially open states. In the fully closed state, a passageway of the water valve is closed such that it blocks or does not allow water to pass through the water valve. In the fully open state, the passageway of the water valve is fully open for allowing water to pass through the water valve at a full flow rate. In the partially open state, the passageway of the water valve is partially open for allowing water to pass through the water valve at a partial flow rate.

The corresponding water valve can refer to an active water valve and to a passive water valve as well as to a throttling water valve.

The active water valve is actuated by an electric motor. The passive water valve is actuated manually by a user or is calibrated or positioned by an operator in a factory that produces the passive water valve.

Referring to the active water valve, it can refer to a modulating water valve and to an on/off water valve. The modulating water valve is also called a modulation water valve. The on/off water valve is also called an isolation water valve.

The modulating water valve is actuated by an electric motor and it can be placed in a fully closed state, in a fully open state, and in several partially open states.

The on/off water valve is actuated by an electric motor and it can be placed in a fully closed state and in a fully open state.

Referring to the passive water valve, it can refer to a constant flow water valve, to a balancing water valve, and to an on/off water valve.

The constant flow water valve has a self-adjusting mechanism, which is calibrated or positioned by an operator in a factory. The self-adjusting mechanism allows water to pass through the constant flow water valve at a predetermined constant flow rate.

The balancing water valve is actuated manually by a user. The modulating water valve can be placed in a fully closed state, in a fully open state, and in several partially open states.

The on/off water valve is actuated manually by a user and it can be placed in two states, namely a fully closed state and a fully open state.

Referring to the throttling water valve, it can refer to the above-mentioned motor actuated modulating water valve, to the above-mentioned manually actuated balancing water valve, to the above-mentioned motor actuated on/off valve, and to the above-mentioned manually actuated on/off valve.

Referring to an activation of the supply chilled water pumps 27, the BMS 13 and/or the MC 73 activate an electric motor of the supply chilled water pump 27 for pushing the water through the supply chilled water pump 27.

Similarly, referring to a deactivation of the supply chilled water pumps 27, the BMS 13 and/or the MC 73 deactivate the electric motor of the supply chilled water pump 27 for not pushing water through the supply chilled water pump 27.

In similar manner, if more than one return chilled water pump 29 is provided, the return chilled water pumps 29 can be connected in parallel, wherein each return chilled water pump 29 can be activated and be deactivated by the BMS 13 and/or the MC 73.

If more than one condenser water pump 22 is provided, the condenser water pumps 22 can be connected in parallel, wherein each condenser water pump 22 can be activated and be deactivated by the BMS 13 and/or the MC 73.

If more than one cooling tower 20 is provided, the cooling towers 20 can be connected in parallel, wherein each cooling tower 20 can be can be activated and be deactivated by the BMS 13 and/or the MC 73.

In detail, an inlet and/or an outlet of the cooling tower 20 is fluidically connected to a corresponding electric motor actuated water valve. The electric motor actuated water valve includes a water valve and an electrical valve motor for actuating or moving the water valve. The BMS 13 and/or the MC 73 can activate or deactivate the respective electrical valve as well as a respective electrical fan motor.

Each cooling tower 20 can also include more than one fan 36.

If more than one chiller 33 is provided, the chillers 33 can be connected in parallel, wherein each chiller 33 can be activated and be deactivated by the BMS 13 and/or the MC 73.

In a special embodiment, where the BMS 13 is absent, the activation of the electric motors and the actuation of the water valves are done manually.

In another embodiment, a heat exchanger is installed in the chilled water loop 51, which includes the supply chilled water pump 27, the chiller 33, and the return chilled water pump 29.

In detail, the heat exchanger is fluidically connected to the supply chilled water pump 27, to the return chilled water pump 29, and to the chiller 33. The supply chilled water pump 27, the heat exchanger, the return chilled water pump 29, and the chiller 33 form a first water loop, which is called a primary water loop of the heat exchanger.

The heat exchanger is also fluidically connected to a tertiary or secondary pump and to the AHU 25, wherein the heat exchanger, the tertiary pump, and the AHU 25 form a second water loop of the heat exchanger. The tertiary pump would drive this water loop.

In use, the air cooling and circulating arrangement 10 is used for adjusting the temperature of climate-controlled spaces of a building.

The BMS 13 manages or activates parts of the air cooling and circulating arrangement 10 in order that the controlled spaces has a user desired comfortable temperature.

The energy control module 16 commands the respective VSD 52 to change frequency pulse width of electrical power supplies of the corresponding electric motors of the respective parts of the air cooling and circulating arrangement 10 for changing the energy consumption of the air cooling and circulating arrangement 10 while maintaining the user desired comfortable temperature of the controlled spaces.

The frequency pulse width corresponds to a speed of the electric motor. Put differently, adjusting the frequency pulse width also changes the speed of the electric motor. The electric motor is often used in water pumps, cooling tower fans, AHU fans, and compressors.

Regarding the chilled water loop 51, it absorbs heat energy from the AHU 25 and transfers this heat energy to the chiller 33.

In detail, the AHU 25 absorbs heat energy from the controlled spaces of the building and then transmits this heat energy to the chilled water flowing through the AHU 25.

The supply chilled water pump 27 and the return chilled water pump 29 circulate the chilled water between the AHU 25 and the evaporator 43 of the chiller 33.

Regarding the refrigerant loop 49, the chiller 33 act to transfer heat energy from the chilled water to the condenser water, wherein said chilled water and said condenser water flow through the chiller 33.

In detail, the evaporator 43 allows the refrigerant, which passes through the evaporator 43, to absorb heat energy from the chilled water, which passes through the evaporator 43. This causes the refrigerant changes from a liquid to a vapor.

The compressor 40 receives the refrigerant from the evaporator 43, wherein the compressor 40 causes the temperature and the pressure of the refrigerant to increase.

The condenser 45 receives the refrigerant from the compressor 40, wherein the refrigerant changes from a vapor to a liquid. During this phase change, the refrigerant transmits its heat energy to the condenser water, which flows through the condenser 45.

The expansion valve 48 provides a phase change of the refrigerant, thereby reducing the temperature of the refrigerant.

Regarding the condenser water loop 50, it transfers heat energy from the chiller 33 to the cooling tower 20.

In detail, the chiller condenser 45 transfers heat energy from the refrigerant, which flows through the chiller condenser 45, to the chilled water, which flows through the chiller condenser 45.

The condenser water pump 22 circulates the condenser water between the chiller 33 and the cooling tower 20.

The cooling tower 20 with the fan 36 acts to expel the heat energy in the condenser water, which flows through the cooling tower 20, to an outside space.

Different methods of retrofitting the building with the air cooling and circulating arrangement 10 are described below.

With one method of retrofitting the building, the BMS 13 is already provided, as depicted in Fig. 1, the air cooling and circulating arrangement 10 does not yet have any VSDs. The BMS 13 is adapted to activate respective parts of the air cooling and circulating arrangement 10.

The method often includes a step of removing or opening passive water valves, such as constant flow water valves or balancing water valves, to reduce pump head in the chilled water loop and/or the condenser water loop.

The method also includes a step of adding an energy control module 16 to the air cooling and circulating arrangement 10.

The energy control module 16 includes VSDs 52 with an activation switch 75 and an MC 73. The switch 75 is adapted for selectively connecting the MC 73 and the VSDs 52 to electric motors of respective equipment. In other words, the selection of the switch 75 allows the MC 73 to send instructions or commands to the equipment, which is connected to the VSD 52.

The MC 73 is electrically connected to a parameter measurement module, which is connected to respective sensors of the air cooling and circulating arrangement 10.

The MC 73 is configured for receiving sensor measurement readings of the sensors of the air cooling and circulating arrangement 10 from the parameter measurement module. The MC 73 is also configured with an improved algorithm for controlling the VSDs 52 to reduce the energy consumption of parts of the air cooling and circulating arrangement 10 according to the sensor measurement readings while maintaining desired thermal or cooling comfort.

After this, the MC 73 can use the VSD 52 to vary flow of water in the chilled water loop and/or the condenser water loop. The MC 73 can change positions of active water valves and/or speed of corresponding water pumps to vary said water flow.

A further method of retrofitting the building is described below, wherein a master controller is set up in relation to a BMS.

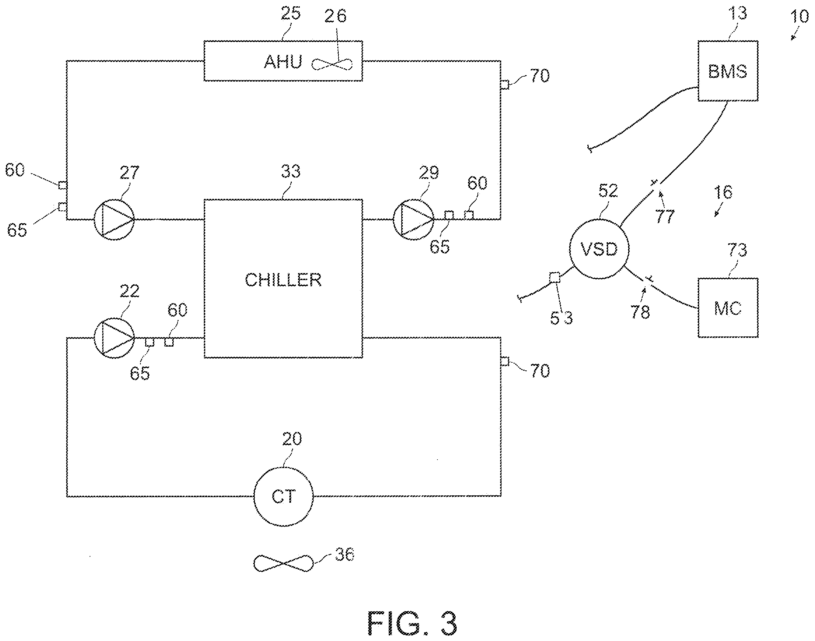

Fig. 3 shows an air cooling and circulating arrangement 10 with a BMS 13 and VSDs 52 that are already existing.

The BMS 13 is configured to control the VSDs 52 in order to adjust speed of respective parts the air cooling and circulating arrangement 10.

The method includes a step of providing an activation switch 77 between the BMS 13 and the VSDs 52. The switch 77 selectively connects the BMS 13 to the VSDs 52.

The method further includes a step of providing a MC 73 and an activation switch 78 between the MC 73 and the VSDs 52. The switch 78 selectively connects the VSDs 52 to the MC 73. In detail, the VSDs 52 are connected either to the BMS 13 or to the MC 73.

The MC 73 is electrically connected to a parameter measurement module, which is connected to respective sensors of the air cooling and circulating arrangement 10.

The MC 73 is configured for receiving sensor measurement readings of the sensors of the air cooling and circulating arrangement 10 from a parameter measurement module. The MC 73 is also configured with an improved algorithm for controlling the VSDs 52 to reduce the energy consumption of parts of the air cooling and circulating arrangement 10 according to the sensor measurement readings while maintaining desired thermal or cooling comfort.

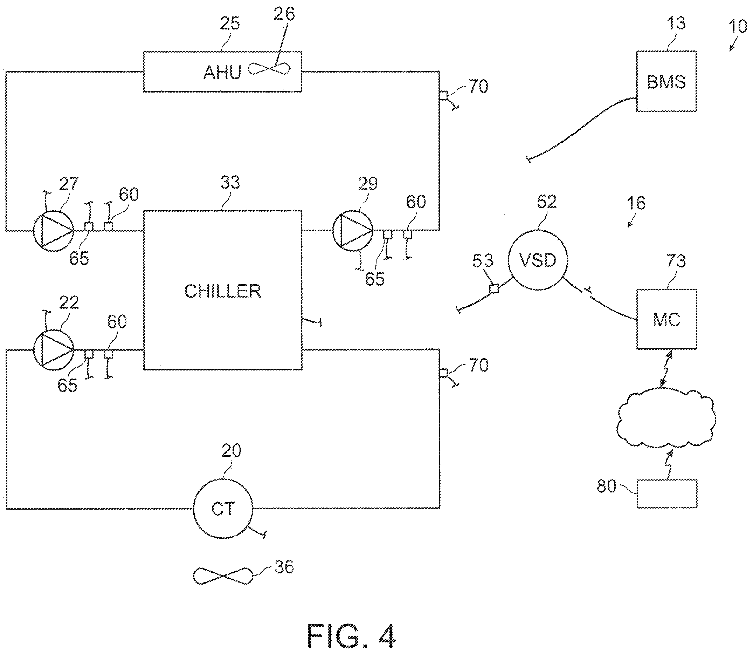

Fig. 4 shows a further air cooling and circulating arrangement. The air cooling and circulating arrangement includes an energy control module that is communicatively connected to a cloud-based computer with a database. The database stores measurement data. The energy control module includes a Programmable Logic Controller (PLC) and/or Supervisory Control And Data Acquisition (SCADA) for treating or processing data from the cloud-based computer for additional evaluation.

In another implementation, the PLC or the SCADA sent data to the cloud-based computer for additional evaluation.

One method of operating the BMS 13 and the MC 73 of the air cooling and circulating unit 10 for a building is described below.

The BMS 13 and the MC 73 serve in a superimposition manner for reducing the energy consumption of the air cooling and circulating unit 10 while maintaining a desired thermal comfort.

The method includes a step of the BMS 13 obtaining parameter measurements from the parts of the air cooling and circulating unit 10.

The BMS 13 then sends the obtained parameter measurements to the MC 73.

After this, the MC 73 calculates an effective operational setting, such as number of operational equipment and speed of each operational pump and operational cooling tower, according to the parameter measurements.

The MC 73 then sends the calculated operational setting to the BMS 13.

The BMS 13 afterward sends corresponding control signals, which are derived according to the calculated operational setting, to VSDs, which are connected to pumps and cooling tower fans.

In another method of operating the BMS 13 and the MC 73, an operator of the air cooling and circulating unit 10 is provided with an activation switch for connecting parts of the air cooling and circulating unit 10 to the MC 73 or to the BMS 13. In other words, the operator selects either the MC 73 or the BMS 13 for providing controlling commands to the air cooling and circulating unit 10.

In another method of operating the BMS 13 and the MC 73, the MC 73 takes sensor measurement data from the air cooling and circulating unit 10 and sending controlling signals to the air cooling and circulating unit 10 via the BMS 13.

In a special method of operating the BMS 13 and the MC 73, a combination of steps of the above methods are performed. Some sensor measurement data are taken from BMS 13 and control signals are sent through BMS 13, while other sensor measurement data are measured directly by the MC 73 with control signals being sent directly from the MC 73.

In a further method of operating the BMS 13 and the MC 73, no BMS 13 exists. Only the MC 73 exists for acquiring all sensor measurement data from the air cooling and circulating unit 10 and for sending all control signals to the air cooling and circulating unit 10.

One method of operating the air cooling and circulating arrangement 10 is described below.

The BMS 13 selectively activates the chiller compressor 40, the condenser water pump 22, the cooling tower fan 36, the supply chilled water pump 27, and the return chilled water pump 29.

After this, the MC 73 receives parameter measurements from the sensors of the parameter measurement module 740 regarding sensor readings parameters of parts of the air cooling and circulating arrangement 10. In particular, the MC 73 receives parameter measurements from the temperature sensors 60, from the pressure sensors 65, from the flow meters 70, and from electrical power meters 53.

The MC 73 then generates control signals to the VSDs 52 according to said parameter measurements.

The MC 73 later sends to the generated control signals to the VSDs 52 for adjusting speed, such as frequency pulse width or frequency or voltage, of electrical power supplies of the corresponding electric motors of the respective parts of the air cooling and circulating arrangement 10 for reducing energy consumption of the air cooling and circulating arrangement 10

while allowing the controlled spaces to reach a user desired comfortable temperature.

Fig. 5 depicts an air cooling and circulating arrangement with additional chilled water pumps and additional condenser water pumps. These additional water pumps could be part of a chiller, which is currently not operating or running. These water pumps could also be installed as a backup, which are used when a normally operating water pump becomes faulty, or when the normally operating water pump is taken out for service or maintenance.

Fig. 5 shows an air cooling and circulating arrangement 100 for a building, which includes a Building Management System (BMS) 130 and with an energy control module 160. The air cooling and circulating arrangement 100 is electrically connected to the energy control module 160 and to the BMS 130. The building is not shown in Fig. 5.

The air cooling and circulating arrangement 100 includes a cooling tower module 200 with a condenser water pump module 220, an Air Handling Unit (AHU) module 250 with a supply chilled water pump module 270 and with a return chilled water pump module 290, as well with as a chiller module 330.

The cooling tower module 200 and the condenser water pump module 220 are fluidically connected to the chiller module 330 by a set of condenser water pipes. The cooling tower module 200 is fluidically connected to the condenser water pump module 220, which is fluidically connected to the chiller module 330. The chiller module 330 is fluidically connected to the cooling tower module 200.

In detail, the cooling tower module 200 includes a cooling tower 20 with water valves 20A and 20B and a cooling tower 20' with water valves 20A' and 20B'. The water valves 20A, 20B, 20A', and 20B' often refer to electric motor actuated isolation valves.

The valve 20A is fluidically connected to a water inlet of the cooling tower 20 while the water valve 20B is fluidically connected to a water outlet of the cooling tower 20.

Similarly, the water valve 20A' is fluidically connected to a water inlet of the cooling tower 20' while the water valve 20B' is fluidically connected to a water outlet of the cooling tower 20'. The water valve 20A is also fluidically connected to the water valve 20A' while the water valve 20B is fluidically connected to the water valve 20B'.

The cooling tower 20 includes a fan 36 while the cooling tower module 20' includes a fan 36'.

Referring to the condenser water pump module 220, it includes a condenser water pump 22 with water valves 22A and 22B as well as a condenser water pump 22' with water valves 22A' and 22B'. The water valves 22A and 22B and the water valves 22A' and 22B' often refer to electric motor actuated modulating water valves.

The water valve 22A is fluidically connected to a water inlet of the condenser water pump 22 while the water valve 22B is fluidically connected to a water outlet of the condenser water pump 22.

Similarly, the water valve 22A' is fluidically connected to a water inlet of the condenser water pump 22' while the water valve 22B' is fluidically connected to a water outlet of the condenser water pump 22'. The water valve 22A is also fluidically connected to the water valve 22A' while the water valve 22B is fluidically connected to the water valve 22B'.

The AHU module 250, the supply chilled water pump module 270, and the return chilled water pump module 290 are fluidically connected to the chiller module 330 by a set of chilled water pipes. The AHU module 250 is fluidically connected to the supply chilled water pump module 270. The supply chilled water pump module 270 is fluidically connected to the chiller module 330, which is fluidically connected to the return chilled water pump module 290. The return chilled water pump module 290 is fluidically connected to the AHU module 250.

Referring to the AHU module 250, it includes a AHU 25 with water valves 25A and 25B and a AHU 25' with water valves 25A' and 25B'. The water valves 25A and 25B and the water valves 25A' and 25B' often refer to electric motor actuated isolation valves.

The water valve 25A is fluidically connected to a water inlet of the AHU 25 while the water valve 25B is fluidically connected to a water outlet of the AHU 25.

Likewise, the water valve 25A' is fluidically connected to a water inlet of the AHU 25' while the water valve 25B' is fluidically connected to a water outlet of the AHU 25'. The water valve 25A is also fluidically connected to the water valve 25A' while the water valve 25B is fluidically connected to the water valve 25B'.

Referring to the supply chilled water pump module 270, it includes a supply chilled water pump 27 with water valves 27A and 27B as well as a supply chilled water pump 27' with water valves 27A' and 27B'. The water valves 27A and 27B and the water valves 27A' and 27B' often refer to electric motor actuated modulating valves.

The water valve 27A is fluidically connected to a water inlet of the supply chilled water pump 27 while the water valve 27B is fluidically connected to a water outlet of the supply chilled water pump 27.

In the similar manner, the water valve 27A' is fluidically connected to a water inlet of the supply chilled water pump 27' while the water valve 27B' is fluidically connected to a water outlet of the supply chilled water pump 27'. The water valve 27A is also fluidically connected to the water valve 27A' while the water valve 27B is fluidically connected to the water valve 27B'.

Referring to the return chilled water pump module 290, it includes a return chilled water pump 29 with water valves 29A and 29B and a return chilled water pump 29' with water valves 29A' and 29B'. The water valves 29A and 29B and the water valves 29A' and 29B' often refer to electric motor actuated modulating water valves.

The water valve 29A is fluidically connected to a water inlet of the return chilled water pump 29 while the water valve 29B is fluidically connected to a water outlet of the return chilled water pump 29.

Likewise, the water valve 29A' is fluidically connected to a water inlet of the return chilled water pump 29' while the water valve 29B' is fluidically connected to a water outlet of the return chilled water pump 29'. The water valve 29A is fluidically connected to the water valve 29A' while the water valve 29B is also fluidically connected to the water valve 29B'.

Referring to the chiller module 330, it includes a chiller 33 with water valves 33A1, 33A2, 33B1, and 33B2 as well as a chiller 33' with water valves 33A1', 33A2', 33B1', and 33B2'. The water valves 33A1, 33A2, 33B1, and 33B2 and the water valves 33A1', 33A2', 33B1', and 33B2' often refer to electric motor actuated isolation valves.

The water valve 33A1 is fluidically connected to a condenser water inlet of the chiller 33 while the water valve 33B1 is fluidically connected to a condenser water outlet of the chiller 33. The water valve 33A2 is fluidically connected to a chiller water inlet of the chiller 33 while the water valve 33B2 is fluidically connected to a chiller water outlet of the chiller 33.

Similarly, the water valve 33A1' is fluidically connected to a condenser water inlet of the chiller 33' while the water valve 33B1' is fluidically connected to a condenser water outlet of the chiller 33'. The water valve 33A2' is fluidically connected to a chiller water inlet of the chiller 33' while the water valve 33B2' is fluidically connected to a chiller water outlet of the chiller 33'.

The water valve 33A1 is fluidically connected to the water valve 33A1' and the water valve 33B1 is also fluidically connected to the water valve 33B1'. The water valve 33A2 is fluidically connected to the water valve 33B2' while the water valve 33B2 is fluidically connected to the water valve 33B2'.

Each of the above the water valve 20A, 20B, 22A, 22B, 25A, 25B, 27A, 27B, 29A, 29B, 29A, 29B, 33A1, 33B1, 33A2, and 33B2 can refer to an on/off water valve with or without an electrical valve motor, or to a modulating water valve with an electrical valve motor. In other words, each can refer to a throttling water valve.

Similarly, each of the water valve 20A', 20B', 22A', 22B', 25A', 25B', 27A, 27B', 29A', 29B', 29A', 29B', 33A1', 33B1', 33A2', and 33B2' can refer to an on/off water valve with or without an electrical valve motor, or to a modulating water valve with an electrical valve motor. Put differently, each can refer to a throttling water valve.

The AHU 25' includes a fan 26'

Referring to the BMS 130, it is adapted for activating electric motors of respective parts of the air cooling and circulating arrangement 100, such as pumps, fans, and compressors. The activation relates to provision of electrical energy to the electric motors. The BMS 130 is electrically connected to these electric motors by cables for selectively connecting these electric motors to corresponding electrical power supplies for providing electrical energy to these electric motors.

The BMS 130 is also adapted for actuating the respective electrical water valves.

The actuation of a water valve refers to changing the position or the state of the water valve, for example from a closed state to a partially open state. The water valve, which is actuated by the BMS 130, is mechanically connected to an electrical valve motor that serves as a valve actuator, which is electrically connected to the BMS 130 with an electrical cable.

In use, the BMS 130 sends a valve actuation electrical signal to the actuator such that the actuator changes or moves the position of the water value.

The BMS 130 is also adapted for activating the supply chilled water pump 27 and the supply chilled water pump 27'.

The BMS 130 is also adapted for activating the return chilled water pump 29 and the return chilled water pump 29'.

The BMS 130 is also adapted for activating the chiller 33 and the chiller 33'.

These water valves act to isolate parts of the air cooling and circulating arrangement 100.

Fully closing of a pair of corresponding water valves and/or switching off respective electric motors, which are respectively connected to a water inlet and to a water outlet of a part of the air cooling and circulating arrangement 100, in effect, acts to remove the part from the air cooling and circulating arrangement 100.

Similarly, opening of the water valves and/or switching on respective electric motors, in effect, acts to include the part in the air cooling and circulating arrangement 100.

As an example, closing of the electric water valves 20A and 20B and switching off the cooling tower fan 36 acts to remove the cooling tower 20 from the air cooling and circulating arrangement 100. Opening of the water valves 20A and 20B acts to include the cooling tower 20 in the air cooling and circulating arrangement 100.

As a result, by way of selectively actuating the cooling tower 20 or 20' by the BMS 130, the air cooling and circulating arrangement 100 can run with both or with only one selected cooling tower 20.

Referring to the energy control module 160, it includes a plurality of Variable Speed Drives (VSDs) 520, a measuring module 740 for measuring parameters of the air cooling and circulating arrangement 100, and a master controller (MC) 730. Only one VSD 520 is shown in Fig. 5 for the sake of simplicity. The VSDs 520, the measuring module 740, and the MC 730 cooperate with each other.

The MC 730 is electrically connected to the VSDs 520, which are connected to parts of the air cooling and circulating arrangement 100.

The MC 730 is also electrically connected to the measuring module 740, which is electrically connected to sensors of the air cooling and circulating arrangement 100. The sensors include temperature sensors, pressure sensors, power meters, humidity meters, and flow meters. These sensors are connected to the parts of the air cooling and circulating arrangement 100 for measuring parameters of these parts.

As a result, the MC 730 can obtain parameter measurements of parts of the air cooling and circulating arrangement 100 from the measurement module 740. The MC 730 can then use the VSDs 520 to adjust frequency pulse widths, frequency, and/or voltages of electrical motors of the air cooling and circulating arrangement 100 according to these parameter measurements and according to a selected control strategy.

Different manners of installing the flow meters are possible.

In one implementation, the flow meters are installed at respective common headers of the chillers 33 and 33' to measure accurately a rate of flow of water from corresponding parts of both of the chillers 33 and 33'. The header refers to a water chamber where water pipes from these corresponding parts of both chillers 33 and 33' are fluidically connected to act as a common pipe. As an example, the common header can be fluidically connected to water outlets of both water pumps 27 and 27'. The common header is labelled "H" in Fig. 5 for easier reference.

In another implementation, the flow meters are installed at respective parts of each chillers 33 and 33' to measure accurately the water flow rates of these parts of the chillers 33 and 33'.

The pressure sensors are often placed farthest away from the respective water pump 22, 22', 27, 27', 29, and 29', such as the AHU 25 and 25', where the pressure of the water is at the end of highest friction loss loop.

The MC 730 is adapted for actuating the respective electric water valves.

As a result, the MC 730 can selectively add or remove parts of the air cooling and circulating arrangement 100, which are associated with these water valves.

In a general sense, in principle, the considerations of the configurations of the energy control module 16 of Figs. 1, 3, and 4 can be applied to the energy control module 160 of Fig. 5.

Several methods of operating the air cooling and circulating arrangement 100 are shown below. Steps of one method can also be combined with steps of another method, where appropriate for providing different ways of operating the air cooling and circulating arrangement 100.

A method for operating the air cooling and circulating arrangement 10 or 100 of Figs 1, 3, 4, and 5 for a building for supporting a desired cooling load is described below.

The method includes a step of providing a set of interlinked decision-making matrixes that is derived for the air cooling and circulating arrangement 10 or 100.

The energy control module 16 or 160 then obtains parameter measurement information from the respective parameter measurement module.

After this, the energy control module 16 or 160 uses the above-mentioned interlinked decision-making matrixes to adjust operating parameters of the parts of the air cooling and circulating arrangement 10 or 100.

The adjustments enable the air cooling and circulating arrangement to operate in high efficiency to provide required thermal comfort for occupants of the building without affecting operational safety.

The adjustments of operating parameters can be done by providing instructions a system administration staff for changing these operating parameters. The staff then performs said change of parameters.

In another implementation, the energy control module 16 or 160 automatically changes the parameters without any manual intervention.

A method of operating the air cooling and circulating arrangement 100 of Fig. 5, using boundary parameter data to support a predetermined cooling load is described below. The boundary parameter data is also called a boundary condition.

The operating boundary condition defines limits within which the parts can operate properly. For example, operating a chiller below a minimum flow limit can cause the chiller to trip or malfunction.

The boundary condition includes

- data of minimum operational motor speed of the water pumps 22, 22' 27, 27', 29, and 29',
- data of minimum differential pressure produced by the water pumps 27 and 27' in order to circulate the chilled water from the AHUs 25 and 25' to the chillers 33 and 33',
- data of allowable rate of change of flow of the chilled water during modulating or during adding or removing of the respective water pump 27, 27', 29, and 29',
- data of allowable rate of change of flow of the condenser water during modulating or during adding or removing of the water pump 22, and 22',
- data of allowable rate of change of temperature of the condenser water loop 50 during modulating of the pump 22, 22' and cooling tower fan 36, 36',
- data of allowable rate of change of temperature of the chilled water loop 51 during modulating of the pump 27, 27', 29 and 29', and
- data of allowable condenser water supply temperature based on weather condition.

The operating boundary condition can be obtained from manufacturers of the equipment. The data can also be obtained during a testing and commissioning stage of the MC 730. The operating boundary condition can also be produced using statistical techniques in accordance with measurements of the respective equipment.

The method comprises a step of equipping the MC 730 with operating boundary condition of equipment or parts of the air cooling and circulating arrangement 100, such as water pumps 22, 22' 27, 27', 29, and 29'.

After this, the MC 730 receives a new operating parameter data of a part of the air cooling and circulating arrangement 100. As an example, the new operating parameter data can relate to a flow and a frequency the electric motors of the water pumps 22, 27, 29, 22', 27', and 29'.

The MC 730 then calculates new operating parameter data for achieving lower energy consumption while maintaining cooling comfort, wherein the new operating parameter data are within the respective operating boundary condition.

The MC 730 then changes the respective operating parameter of the air cooling and circulating arrangement 100 according to the new operating parameter data, which are within the operating boundary condition.

In one example, a manufacturer of the chiller 33 defines a minimum operating flow rate of 70 liter/second for the chiller 33. The flow rate of 70 liter/second is then taken up as a lower operating boundary condition for the condenser water loop 50 and the condenser water pump 22. The MC 730 subsequently operates the condenser water pump 22 such that the condenser water pump 22 operates with a water flow rate of not slower than 70 liter/second.

This method has a benefit of preventing the air cooling and circulating arrangement 100 from operating outside its operating boundary condition limits, which can cause damage to its parts. Moreover, the air cooling and circulating arrangement 100 operates with reduced energy consumption.

The flow rate, the pressure, and the electrical energy consumption of the corresponding water pumps 22, 22', 27, 27', 29, and 29' can be described using affinity laws, which are shown below.

|  | Change in speed(N) |
|---|---|
| Flow (Q) | $Q_2 = Q_1 (\dfrac{N_2}{N_1})$ |
| Pressure (ΔP) | $\Delta P_2 = \Delta P_1 (\dfrac{N_2}{N_1})^2$ |
| Power (P) | $P_2 = P_1 (\dfrac{N_2}{N_1})^3$ |

These parameters can also be described with graphs.

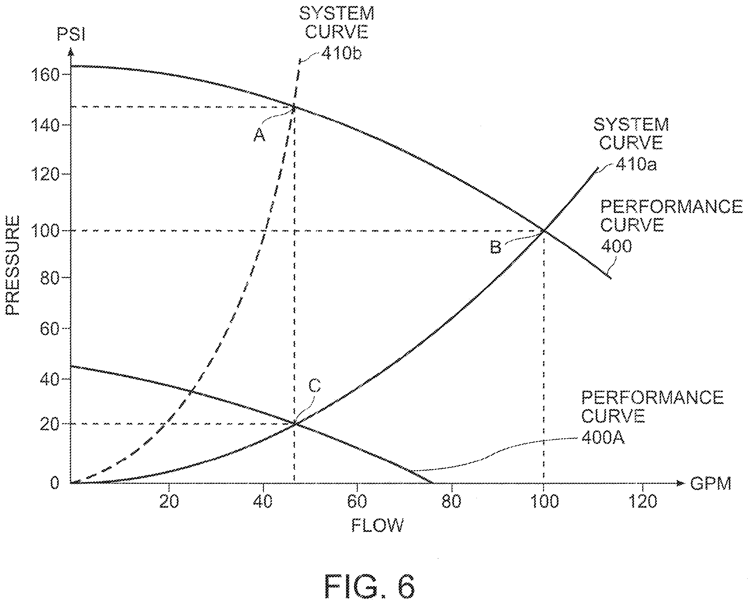

Fig. 6 shows different system curves of a water flow system with a modulating water valve and different performance curves of water pumps of the water flow system for the air cooling and circulating arrangement 10 or 100 of Figs. 1, 3, 4, and 5.

The following disclosure is a generic teaching that applies in principle to all water pumps of Figs 1, 3, 4, and 5. Different from many other systems that use isolation water valves or modulating water valves to adjust the flow of water, the pumps here are provided with a VSD.

The isolation or modulating water valve can act to restrict or to adjust the flow of water through the water valve. The isolation water valve can be placed in a fully closed state, in a fully open state while the modulating water valve can be placed in and in a fully closed state, in a fully open state and in several partially open states.

The performance curves comprise graphs 400 and 400a. The graph 400 shows a relationship between the pressure and the flow rate of water from the water pump, wherein the water pump is operating at a predetermined full speed. The pressure here is called pump head. The graph 400a shows a relationship between the pump head and the flow rate of water from the water pump, wherein the water pump is operating at a predetermined reduced speed.

The system curves include graphs 410a and 410b. The graph 410a shows a relationship between the pump head and the flow rate of water of the water flow system, wherein the modulating water valve is fully open. The graph 410b shows a relationship between the pump head and the flow rate of water of the water flow system, wherein the modulating water valve is only partially open.

In one implementation, the water pump is operating at the predetermined full speed and the water valve is placed in a partially open position. The water from the water pump later has a respective resistance or pump head of about 1034 KPa (150 pounds per square inch (psi)) and a respective flow rate of about 10 m³/h (45 gallons per minute (GPM)), which corresponds to an intersection point A between the water pump performance curve graph 400 and the system curve graph 410b.

If the modulating water valve is placed in a fully open position, the water from the water pump then has a respective resistance of about 689 KPa (100 pounds per square inch (psi)) and a respective flow rate of 22,7 m³/h (100 gallons per minute (GPM)), which corresponds to an intersection point B between the water pump performance curve graph 400 and the system curve graph 410a.

The above-described reduction of flow from 22,7 m³/h (100 gallons per minute) to 10 m³/h (45 gallons per minute) is achieved by adjusting the modulating water valve while maintaining the same pump speed. If the speed of the water pump is reduced, the water from the water pump has a respective resistance of about 138 KPa (20 pounds per square inch (psi)) and a respective flow rate of about 10 m³/h (45 gallons per minute (GPM)), which corresponds to an intersection point C between the water pump performance curve graph 400a and the system curve graph 410a.

Although the point B represents a higher flow, this may be undesirable for the system. To maintain the desired water flow, either changing of position of the water valve, which corresponds to the point A or reducing the pump speed, which corresponds to the point C, can be used. The water pump consumes optimum or reduced power when flow reduction is obtained through adjusting pump speed with a fully open valve, which is represented by the point C.

In many air conditioning systems, actual water flow resistance and resulting water flow rate is only known after installation and commissioning of an air conditioning system or an air cooling and circulating arrangement.

As such, modulating water valves are installed across the air conditioning system to allow for adjustment of the water flow rate of the air conditioning system. However, as seen in the description of Fig. 6 above, a reduction of flow by closing a modulating water valve would lead to an increased pressure in the water pump, which translates or leads to an increased energy consumption, according to the equations below:

Pump Power (kW) = [Flow rate (m3/s) x Pressure (N/m2)]/ (1000 x pump efficiency)

Hence, the energy consumption of the pump can be reduced if the same flow rate is achieved with lower pump head and lower pump speed, in order to support the same cooling load.

In short, the embodiments described here apply this by switching between one or more water pumps, reduction of pump head with further opening the valves, according to the required flow rate, and by adjusting the speed of the pump motor accordingly, in order to reduce the energy consumption of the pumps for a given flow rate, and the corresponding air cooling and circulating arrangement, while supporting the same cooling load.

The above principle is applied below.

A method of operating the air cooling and circulating arrangement 100 of Fig. 5 to support a cooling load, for providing a desired thermal comfort, to climate-controlled spaces of a building, with reduced energy consumption, is described below.

The method uses a strategy to reduce pump head of the chilled/condenser water pump while increasing opening of the corresponding modulating water valve of the chilled/condenser water pump for providing the same corresponding chilled/condenser water flow rate and thereby supporting the same cooling load, but with lower energy consumption.

The water flow rate enables the air cooling and circulating arrangement 100 to support a cooling load for providing a predetermined thermal comfort.

The cooling load refers to amount of heat removed from a climate-controlled space. The thermal comfort relates to a temperature and to humidity of climate-controlled spaces of a building.

This strategy can be applied to other water pumps of the air cooling and circulating arrangement 100.

Fig. 7 shows a flow chart 500 of the above-mentioned method, by illustrating the operation of the air cooling and circulating arrangement 100 of Fig. 5.

The flow chart 500 includes a step 510 of providing the MC 370 with boundary condition or boundary parameter data.

The MC 370 later performs a step 512 of measuring water flow rate of the chillers 33 and 33'. The flow meters then send the respective water flow information to the MC 730.

After this, a step 515 of a MC staff fully opening the required water valves 22A, 22B, 27A, 27B, 29A, 29B, 22A', 22B', 27A', 27B', 29A', and 29B' is performed. The fully open water valves 22A, 22B, 27A, 27B, 29A, 29B, 22A', 22B', 27A', 27B', 29A', and 29B' do not block or restrict the flow of water through these water valves 22A, 22B, 27A, 27B, 29A, 29B, 22A', 22B', 27A', 27B', 29A', and 29B'. In effect, they act to lower pump head and increase water flow rate.

The flow meters of the chillers 33 and 33' or a flow meter of common header of the chillers 33 and 33' then performs a step 525 of measuring respective new water flow of the chillers 33 and 33'. Thereafter, the flow meters send the respective water flow information to the MC 730.

After this, the MC 730 performs a step 530 of calculating a desired water flow and of determining speed of the corresponding water pumps 22, 27, 29, 22', 27' and 29' according to the received flow meter water flow information.

The pump speed corresponds a desired water flow rate of the air cooling and circulating arrangement 100 for supporting the desired cooling load.

The MC 730 later performs a step 540 of transmitting control signals to the VSDs 520 for changing speed of the water pumps 22, 27, 29, 22', 27', and 29'. The steps 550 and 560 in Fig. 7 are optional.

The respective water flow rate of the water pumps 22, 27, 29, 22', 27' and 29' are then measured to verify the desired water flow rate is achieved.

The respective electrical energy consumption of the water pumps 22, 27, 29, 22', 27' and 29' are also measured.

This method provides a benefit of providing the same flow rate with lower energy consumption. In effect, the water pumps 22, 27, 29, 22', 27', and 29' operate at lower speeds while allowing the AHUs 25 and 25' to provide the desired thermal comfort.

The different pump speed can be achieved by changing frequency pulse width, frequency, and/or voltage of the electrical power supply of the water pump.

In effect, the modulating water valves 22A, 22B, 27A, 27B, 29A, 29B, 22A', 22B', 27A', 27B', 29A', and 29B' are kept fully open at all times while the flow is adjusted only with VSDs.

In short, the MC 730 changes positions of the modulating water valves in the chilled water loop 51. These valve position changes then lead to a change of amount of chilled water flowing through the AHU 25, which then impacts temperature of air leaving the AHU 25. This change of amount of chilled water later leads to the MC 730 adjusting speed of chilled water pump.

The above methods are also applicable for condenser water pumps, and other water pumps.

In other words, the structure of the air cooling and circulating arrangement 100 is automatically adapted such that the energy consumption for a given cooling load is improved, within the operating boundary condition of its components.

Another method of operating the air cooling and circulating arrangement 100 of Fig. 5 to support a cooling load, for providing a desired thermal comfort, to climate-controlled spaces of a building, with reduced energy consumption, is described below.

The method uses a strategy to change number and to change corresponding speed of operating water pump, for overcoming resistance to provide the same selected water flow rate, with reduced energy consumption. The strategy includes a step of determining different numbers of operating water pump with a different corresponding pump speed or configuration to achieve the same selected water flow rate. If the water flow rate can be achieved with a specific number of water pump and a corresponding pump speed, but with lower energy consumption, a step is then performed to activate this specific number of operating water pump and the corresponding pump speed.

By way of example, the method is explained with the water pumps 27 and 27'.

The MC 730 activates the water pump 27 of the air cooling and circulating arrangement 100, wherein the water pump 27 operates at a first selected speed for providing a desired predetermined water flow rate.

The MC 730 then determines energy consumption of the water pump 27. This determination can be achieved by measuring a first energy consumption of the water pump 27.

After this, the MC 730 evaluates the effect of adding a corresponding additional water pump 27', wherein both the water pump 27 and the additional water pump 27' operate at a second selected speed for providing the same predetermined water flow rate, wherein the second selected speed is slower than the first selected speed. In effect, the activation of the second water pump 27' serves to add the water pump 27' to an operation of the air cooling and circulating arrangement 100. This is shown in Fig. 7, Step 550.

Thereafter, the MC 730 determines a second energy consumption of both the water pump 27 and the corresponding water pump 27'.

The MC 730 later compares the first energy consumption with the second energy consumption.

The MC 730 then selects a number of operating water pump with corresponding water pump speed, according the comparison, to provide lower or reduced energy consumption.

After this, the MC 730 activates the selected number of water pump 27 and 27' to operate at its corresponding water pump speed.

The MC 730 also checks to ensure that an operation of the water pump 27 and the additional water pump 27' are operating within the relevant boundary conditions. Examples of the boundary conditions include adequate water pressure at the AHU 25, allowable rate of change of pump speed, allowable minimum pump speed, and availability of equipment.

In a further embodiment, the MC 730 uses a predetermined matrix with predetermined equipment configurations to select the number of operating water pump with corresponding pump speed.

In another embodiment, the MC 730 uses a statistical method to process historical data for selecting number of operating water pump with corresponding pump speed.

In a general sense, the number of operating water pump can be increased from one to two, or to more than two, wherein the number of operating water pump acts to provide a desired water flow rate. The number of operating water pump can also be decreased from two to one, wherein one water pump acts to provide the desired water flow rate.

In a further example, the air cooling and circulating arrangement 100 is operating in a "one pump" configuration, wherein the chiller 33, the supply chilled water pump 27 with the return chilled water pump 29, the AHUs 25 and 25', the condenser water pump 22, and the cooling tower 20 are activated while the supply chilled water pump 27' with the return chilled water pump 29', the chiller 33', and the cooling tower 20' are not activated.

In another example, the air cooling and circulating arrangement 100 is operating in a "two-pump" configuration, wherein the chiller 33, the supply chilled water pump 27 with the return chilled water pump 29, the supply chilled water pump 27' with the return chilled water pump 29', the AHUs 25 and 25', the condenser water pump 22, and the cooling tower 20 are activated while the chiller 33' and the cooling tower 20' are not activated.

In a further embodiment, the MC 730 sends a signal to the BMS 130 for activating a water pump. After this, the BMS 130 sends a visual text message and/or an email to an operator for manually activating said water pump.

Alternatively, the BMS 130 sends an activation signal directly to said water pump to activate it.

This method provides a benefit of supporting a required cooling load with reduced total energy consumption.

A further method of operating the air cooling and circulating arrangement 100 of Fig. 5 to support a cooling load, for providing a desired thermal comfort, to climate-controlled spaces of a building, with reduced energy consumption, is described below.

The method uses a strategy to optimize or to reduce the chilled water pump speed, to provide the same desired thermal comfort, with reduced energy consumption. The reduction of the chilled water pump speed is done such that the chilled water delta T value does not exceed a predefined thermal comfort delta T limit.

By way of example, the method is explained with the AHU 25 and the water pump 27 being in an operating state, and the AHU 25' and the water pump 27' being not in the operating state, while the other parts of the air cooling and circulating arrangement 100 are in the operating state.

The MC 730 activates the water pump 27, wherein the water pump 27 operates at an initial preselected speed for providing a desired flow rate of the chilled water, which flows through the AHU 25. The AHU 25 supplies air to the climate-controlled spaces of the building.

The MC 730 then obtains energy consumption data of the water pump 27 from a power measurement meter. The MC 730 also receives temperature data of the chilled water from temperature sensors while the chilled water is flowing through the AHU 25. The MC 730 also receives pressure measurement data of this chilled water from pressure sensors. These sensors are illustrated in Fig. 1.

After this, the MC 730 performs a step of reducing the speed of the chilled water pump 27 to a first pump speed.

This speed reduction is also done such that the first pump speed does not violate or exceed boundary condition, which is related to minimum pressure required to force the chilled water through the AHU 25.

This pump speed reduction acts to reduce the flow rate of the chilled water, which flows through the AHU 25. The reduced water flow rate then causes an increase of the temperature of the return chilled water from the AHU 25.

The MC 730 then checks to ensure that the return chilled water temperature does not exceed a predetermined thermal comfort return chilled water temperature upper level.

The return chilled water temperature relates to a temperature of return air to the AHU 25. The temperature of return air to the AHU 25 often defines or provides an indication of thermal comfort of the occupants in the climate-controlled spaces.

When the return chilled water temperature does not exceed the predetermined thermal comfort return chilled water temperature upper level, the AHU return air temperature is keep with a determined return air temperature range relating to the desired thermal comfort, thereby ensuring that the occupants experience the desired thermal comfort.

The MC 730 also performs a step of checking to ensure that a delta T value of the chilled water does not exceed a predefined thermal comfort delta T limit. The chilled water delta T value refers to a difference between a temperature data of the return chilled water and a temperature data of the supply chilled water to the AHU 25.

The MC 730 obtains temperature measurements of the chilled water. The MC 730 then calculates a current delta T value of the chilled water, according to the obtained temperature measurements. After this, the MC 370 compares the current chilled water delta T value with the predefined thermal comfort delta T limit.

If the current chilled water delta T value exceeds the predefined thermal comfort delta T limit, the MC 730 then sends a signal to a VFD, which is connected to the supply chilled water pump 27 for increasing slightly the speed of the chilled water pump 27 to a second pump speed until the desired predefined thermal comfort chilled water delta T value is reached. The second pump speed is higher than the first pump speed.

The chilled water pump speed adjustment is done such that the pump speed does not exceed boundary condition relating to pump speed.

The above-mentioned adjustment of pump speed to the first or the second pump speed allows for improvement of energy consumption of the chilled water pump 27.

In a special embodiment, the method uses an operational matrix to derive the current chilled water delta T value.

In a further implementation, the method uses an algorithm, which uses statistical methods, to determine the value of the current chilled water delta T.

In summary, the chilled water delta T is increased with reduction of speed of the chilled water pump 27. This causes a reduction of pump energy consumption. This also allows for a rise of temperature of the return chilled water to the chiller 33 while maintaining the temperature of the supply chilled water from the chiller 33.

In one example, the MC 730 detects a chilled water delta T of 4 degrees Celsius (C) while a predefined thermal comfort delta T limit is 5 degrees C. The MC 730 then reduces speed of the chilled water pump 27 by about 25%, thereby increasing the chilled water delta T from 4 to 5 degrees C. This then leads to reduction of energy consumption of the chilled water pump from about 60 kilowatt (kW) to about 25 kW.

In another example, the MC 730 decreased the flow of chilled water pump by an average of about 20% (ranging from about 0% to about 30%), thereby increasing AHU loop delta T from about 3.5 to about 5 degree-Celsius, while supporting the same cooling load and providing essentially the same cooling comfort. This then causes the chilled water pump energy consumption to reduce by about 49% (ranging from about 0% to about 66%) .

This method provides a way of reducing the electrical energy consumption of the air cooling and circulating arrangement 100 while supporting the same cooling load.

The method can also be applied to the air cooling and circulating arrangement 10 of Fig. 1.

The method can also be used for the condenser water pump.

A method of applying the above strategies together to the air cooling and circulating arrangement 100 of Fig. 5 is described below.

The method aims to, if still possible, remove as many flow restrictions, as possible. Examples of the flow restrictions include opening fully of throttling water valve and removing constant flow valve in all water loops of the air cooling and circulating arrangement 100.

The method includes performing a step to apply the earlier described method to automatically reduce speed of the chilled/condenser water pump for providing essentially the same chilled/condenser water flow rate, with reduce energy consumption.

A further step is then performed to apply the earlier described method to automatically change number and to automatically change speed of water pumps for providing the same water flow rate, with reduce energy consumption.

After this, another step is performed, to apply the earlier described method to automatically optimize or reduce the chilled water pump speed, but providing the same thermal comfort, with reduced energy consumption.

These above-mentioned steps can be repeated again for improving the air cooling and circulating arrangement 100.

A method of operating the air cooling and circulating arrangement 100 of Fig. 5, to support a cooling load, for providing a desired thermal comfort, to climate-controlled spaces of a building, with reduced energy consumption, is described below.

The method uses a strategy to change number of cooling tower and to change speed of corresponding cooling tower fan to achieve same or lower condenser water entry temperature, but with reduced overall energy consumption.

In use, a specific flow rate and a specific temperature of condenser water leave a cooling tower to support a cooling load, which provides a desired user thermal comfort. The condenser water leaving the cooling tower then enters a chiller condenser. As such, the temperature of this water is commonly called condenser water entry temperature.

The method includes a step of the MC 730 activating the cooling tower 20 and its cooling tower fan 36 as well as actuating related valves 20A and 20B in the air cooling and circulating arrangement 100 such that the cooling tower fan 36 operates at a first preselected operating speed for providing a desired condenser water entry temperature. In effect, this step serves to add the cooling tower 20 to the air cooling and circulating arrangement 100.

The MC 730 then determines energy consumption of the cooling tower fan 36. This determination can be achieved by using a power meter 53 to measure energy consumption of the cooling tower fan 36 of the cooling tower fan 36.

After this, the MC 730 evaluates an effect of activating a corresponding additional cooling tower 20' with its cooling tower fan 36' as well as actuating related valves 20A' and 20B'.

This evaluation includes a step of calculating or computing a second preselected operating speed for both the cooling tower fans 36 and 36'. The second preselected operating speed is slower than the first preselected operating speed while maintaining the same desired condenser water entry temperature. Because of reduced friction loss of airflow at lower speed, this also lead to lower overall fan energy consumption.

The MC 730 also considers or checks that the above steps are done such that parts of the air cooling and circulating arrangement 100 operate within boundary conditions. Examples of the boundary conditions include maximum condenser water temperature allowed by chiller manufacturer, minimum cooling tower fan speed, and maximum total energy consumption.

The MC 730 then selects number of operating cooling tower as well as selects speed of each associated operating cooling tower fan to provide same condenser water entry temperature, with reduced energy consumption.

After this, the MC 730 generates activation and actuation control signals in accordance to said selection and sends these control signals to the respective equipment of the air cooling and circulating arrangement 100.

The above step is done such that parts of the air cooling and circulating arrangement 100 operate the above boundary conditions.

In a further embodiment, the MC 370 sends a control signal for adding a cooling tower to the BMS 130. After this, the BMS 130 sends a corresponding control signal to respective equipment to activate the respective cooling tower fan and to actuate the respective valves.

In a general sense, the number of operating cooling tower can be increased, such as from one to two, or to more than two, wherein these operating cooling towers act together to provide a desired condenser water entry temperature with reduced overall fan energy consumption.

The number of operating cooling towers can also be decreased, such as from two to one, wherein the activated operating cooling tower acts to provide a desired condenser water entry temperature with reduced overall fan energy consumption.

Each operating cooling tower can also be fitted with one or more fans.

This method has a benefit of reducing the total energy consumption while supporting the same cooling load.

A method of operating the air cooling and circulating arrangement 100, to support a cooling load, for providing a desired user thermal comfort, with reduced energy consumption, is described below.

The method uses a strategy to change AHU chilled water valve position and to change corresponding AHU fan speed, to support a cooling load, for providing a desired user thermal comfort, with reduced energy consumption.

The AHU 25 includes a fan for blowing air, in order to supply air to climate-controlled spaces of a building. The supply air is later returned to the AHU 25. The thermal comfort, which perceived by occupants of a climate-controlled space, is a function of a flow rate and a temperature of the supply air from the AHU 25.

The method comprises a step of the MC 730 obtaining electrical energy consumption measurement data of an electric motor of the fan from a fan motor power meter 53.

The MC 730 then obtains temperature measurement data of the supply air from the AHU 25 from a supply air temperature sensor and obtains flow rate data of the supply air from the AHU 25 from a supply airflow meter. The flow rate can also be calculated from a frequency setting of a VSD, which is connected to the fan motor.

If the MC 730 detects that the temperature of the air, which is being returned to the AHU 25, is lower than a desired set point, the MC 730 then sends a signal to the fan motor VSD for reducing a rotational speed of the fan. This fan speed reduction has an effect of increasing the temperature of the air being returned to the AHU 25.

The MC 730 also checks and ensures that the fan speed reduction is done such that the flow rate of air in the climate-controlled space meets a boundary condition regarding minimum climate-controlled space airflow. In other words, the climate-controlled space airflow rate is higher than the minimum allowable climate-controlled space airflow rate.

If the MC 730 later detects that, with the reduced fan speed, the return air temperature is still lower than the desired set point, the MC 730 then sends a signal to change positions of the water valves 25A and/or 25B of the AHU 25. This is done in order to reduce a flow rate of the chilled water, which is flowing through the water valves 25A and/or 25B and through the AHU 25.

The reduction of the flow rate of the chilled water acts to increase the temperature of the supply air from the AHU 25 to the climate-controlled space. This then causes the return air temperature to rise towards the desired level while reducing energy consumption of the air cooling and circulating arrangement 100.

If the return air temperature is higher than the desired set point, similar steps, which are opposite to the above steps, are performed.

The method has an advantage of providing a means to reduce energy consumption while providing the same thermal comfort.

A method of operating the air cooling and circulating arrangement 100 for supporting a cooling load, to provide a predetermined thermal comfort, with reduced overall energy consumption, is described below.

The method uses a strategy to change number of operating cooling tower and to change corresponding speed of cooling tower fan, for reducing temperature of the supply condenser water, for supporting a cooling load, to provide a desired thermal comfort, with reduced overall energy consumption, wherein energy consumption of the cooling tower fan is increased while energy consumption of the chiller is reduced.

The method includes a step of the MC 730 obtaining wet bulb and dry bulb temperature measurement data of ambient of the operating cooling tower 20, from a cooling tower ambient temperature sensor.

The MC 730 also obtains humidity measurement data of the ambient of the cooling tower 20, from a cooling tower ambient humidity sensor.

The MC 730 also obtains energy consumption data of a motor of a fan 36 of the cooling tower 20, from a fan motor power meter 53.

After this, the MC 730 calculates a difference between an increase of overall cooling tower energy consumption for operating an additional cooling tower 20 to reduce the supply condenser water temperature and a corresponding reduction of compressor energy consumption due to the reduced supply condenser water temperature.

The MC 730 also calculates a difference between an increase of fan energy consumption for increasing speed of the cooling tower fan 36 to reduce the supply condenser water temperature and corresponding reduction of compressor energy consumption due to the reduced supply condenser water temperature. This further described below.

Fig. 8 shows a graph of a relationship between chiller efficiency and supply condenser water temperature. The graph depicts a case, wherein an increase of compressor efficiency corresponds with a decreased of supply condenser water temperature. In other words, the cooling tower 20 and/or the cooling tower fan 36 can consume more energy to reduce temperature of the condenser water being supplied to the compressor 40. The compressor 40 can then consume less energy for maintaining the same cooling load.

Fig. 9 shows graphs of a relationship between chiller efficiency and chiller load.

The MC 730 thereafter selects a number of the operating cooling tower 20 and selects a speed of the cooling tower fan 36 for supporting the same cooling load, with reduced overall energy consumption.

After this, the MC 730 activates the cooling tower 20 according to the selected operating cooling tower number and/or also activates the operating cooling tower fan 36 according to the selected cooling tower fan speed for reducing the temperature of the supply condenser water.

The method has an advantage of providing a means to reduce the energy consumption while providing the same thermal comfort.

Fig. 10 shows a chart 800 of a method of operating the air cooling and circulating arrangement 100, to support a cooling load, for providing a desired thermal comfort, to climate-controlled spaces of a building, is described below.

The climate-controlled space is also called an air-conditioned space. The method includes several strategies.

In general, an AHU supports a cooling load of one or more climate-controlled spaces. The cooling load is a function of, or is influenced by, a flow rate of supply air from the AHU to the climate-controlled spaces as well as a difference between a temperature of the supply air that is flowing from the AHU to the climate-controlled spaces and a temperature of return air that is flowing to the AHU from the climate-controlled spaces.

Occupants of the climate-controlled spaces experience a thermal comfort, which is a function of the flow rate and of the temperature of the supply air from the AHU. A user desired thermal comfort corresponds to a user desired temperature and to a user desired air flow.

The cooling load of the building climate-controlled spaces can increase due to additional heat being generated in the climate-controlled spaces.

The additional heat can originate from an increase of number of people, from an increase of operating equipment in the climate-controlled spaces, or from outside warm air being drawn into the climate-controlled spaces.

The air cooling and circulating arrangement 100 then acts to support the increased cooling load, wherein the additionally generated heat is transported away or removed from the climate-controlled spaces, in order to provide the same desired thermal comfort.

In detail, an additionally generated heat causes an increase of temperature of the climate-controlled spaces, which then causes the temperature of the return air to the AHU 25 to increase above a predetermined return air temperature limit.

The MC 730 later receives data of the increased AHU return air temperature.

If the MC 730 detects that the AHU return air temperature is above the predetermined return air temperature limit, the MC 730 then perform a step S1 of increasing a speed of the AHU fan 26, to support the cooling load, for providing a desired thermal comfort, with improved energy consumption.

In particular, the MC 730 sends a fan speed activation signal to the VFD being connected to the AHU fan 26 for increasing speed of the AHU fan 26. This then causes an increase of the flow rate of the AHU supply air, which, in turn, acts to decrease the temperature of the AHU return air towards the predetermined return air temperature limit for supporting the cooling load.

With the increased air flow, to maintain a desired air temperature, the MC 730 then acts to gradually open the modulating water valve 25B of the AHU 25.

This opening of the modulating water valve 25B increases the flow rate of the chilled water, which passes through the AHU 25. This serves to maintain the temperature of the supply air from the AHU 25. This maintained AHU supply air temperature together with increased air flow then acts to reduce the temperature of the return air to the AHU 25, to support the additional cooling load.

The increase of the flow rate of the chilled water passing through the AHU 25 together with the opening of the modulating water valve 25B of the AHU 25 acts to decrease the flow rate the chilled water passing through the AHU 25'.

This reduced chilled water flow rate also acts to reduce the pressure of the chilled water passing through the AHU 25'.

If the MC 730 detects an increase of the temperature of the return air to the AHU 25 or 25' and also detects a reduction of the pressure of chilled water passing through the AHU 25', the MC 730 then performs a step S2 to increase the chilled water pump speed, to provide the same desired thermal comfort, with improved energy consumption.

The MC 730 then perform a step S3 to change a number of chilled water pump 27 and 27' and to change of a corresponding flow rate of the respective water pump 27 and 27' in order to ensure adequate flow rate of the supply chilled water with lowest possible, or with reduced energy consumption.

As an optional step, the MC 730 calculates the optimal configuration of chillers and sends a signal to activate the relevant chillers.

The chilled water transports the additional heat of the climate controlled spaces to the chiller for supporting the additional cooling load of the climate controlled spaces. The chiller then removes the additional heat from the chilled water.

The increased of the cooling load of the climate controlled spaces also increases the need for rejecting heat of the cooling load. Heat rejection is defined as total amount of heat generated from the climate-controlled space as well as heat generated in the compressor for process of cooling the climate controlled spaces.

The MC 730 later performs a step S4 to change number and to change corresponding speed of the operating condenser water pump for delivering the same condenser water flow rate, with reduced energy consumption.

The MC 730 then performs a step S5 of optimizing or reducing the speed of the condenser water pump 22 and 22', to provide the same desired thermal comfort, with reduced energy consumption.

Changes in condenser water flow may lead to changes in operation of the cooling towers 20 and 20'.

The MC 730 then perform a step S6 to change number of cooling tower and to change speed of corresponding cooling tower fan to achieve the same condenser water entry temperature, but with reduced overall energy consumption.

After this, the MC 730 perform a step S7 to change number of operating cooling tower and to change corresponding speed of cooling tower fan, for changing temperature of the supply condenser water, to support the cooling load, with reduced overall energy consumption.

In short, the above steps are used to optimize or improve operation of equipment of the air cooling and circulating arrangement 100, in order to provide the desired thermal comfort at lowest possible, or reduced energy consumption.

In a case of a decrease of the cooling load, steps which are opposite to the above steps are performed.

In a special embodiment of the above method, the cooling load of the climate-controlled spaces remains the constant, while the ambient temperature and/or ambient humidity changes.

The MC 730 then detects the change in ambient conditions and executes the above step S6 to change number of cooling tower and to change speed of corresponding cooling tower fan to achieve the same condenser water entry temperature, with reduced energy consumption.

The MC 730 then performs the above step S7 to change number of operating cooling tower and to change corresponding speed of cooling tower fan for changing temperature of the supply condenser water, to support the cooling load, with reduced energy consumption.

In this manner, the MC 730 constantly optimizes or adapts the equipment of the air cooling and circulating arrangement 100 to provide the desired thermal comfort at lowest possible, or lower, energy consumption.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

REFERENCE NUMBERS

**[0399]**

| | |
|------|------|
| 10 | air cooling and circulating arrangement |
| 13 | Building Management System (BMS) |
| 16 | energy control module |
| 20 | cooling tower |
| 20A | water valves |
| 20B | water valves |
| 20A' | water valves |
| 20B' | water valves |
| 20' | cooling tower |
| 22 | condenser water pump |
| 22A | water valves |
| 22B | water valves |
| 22A' | water valves |
| 22B' | water valves |
| 22' | condenser water pump |
| 25 | Air Handling Unit (AHU) |
| 25A | water valves |
| 25B | water valves |
| 25A' | water valves |
| 25B' | water valves |
| 25' | AHU |
| 26 | AHU fan |
| 26' | AHU fan |
| 27 | supply chilled water pump |
| 27A | water valves |
| 27B | water valves |
| 27A' | water valves |
| 27B' | water valves |
| 27' | supply chilled water pump |
| 29 | return chilled water pump |
| 29A' | water valves |
| 29B' | water valves |
| 29' | return chilled water pump |
| 33 | chiller |
| 33A1 | water valves |
| 33A' | water valves |
| 33B1 | water valves |
| 33B2 | water valves |
| 33A1' | water valves |
| 33A2' | water valves |
| 33B1' | water valves |
| 33B2' | water valves |
| 33' | chiller |

EP 3 485 202 B1

| | |
|---|---|
| 36 | fan |
| 36' | fan |
| 40 | compressor |
| 43 | evaporator |
| 45 | condenser |
| 48 | expansion valve |
| 49 | refrigerant loop |
| 50 | condenser water loop |
| 51 | chilled water loop |
| 52 | Variable Speed Drive (VSD) |
| 53 | power meter |
| 60 | temperature sensor |
| 65 | pressure sensor |
| 70 | flow meter |
| 73 | master controller (MC) |
| 75 | switch |
| 77 | switch |
| 78 | switch |
| 80 | cloud based computer |
| 100 | air cooling and circulating arrangement |
| 130 | Building Management System (BMS) |
| 160 | energy control module |
| 200 | cooling tower module |
| 220 | condenser water pump module |
| 250 | Air Handling Unit (AHU) module |
| 270 | supply chilled water pump module |
| 290 | return chilled water pump module |
| 330 | chiller module |
| 370 | master controller (MC) |
| 400 | graph |
| 400a | graph |
| 400b | graph |
| 410 | graph |
| 500 | flow chart |
| 510 | step |
| 512 | step |
| 515 | step |
| 525 | step |
| 530 | step |
| 540 | step |
| 550 | step |
| 560 | step |
| 730 | master controller |
| 740 | measuring module |
| 800 | chart |
| | |
| S1 | step |
| S2 | step |
| S3 | step |
| S4 | step |
| S5 | step |
| S6 | step |
| S7 | step |

**Claims**

1. A method of operating a Heating, Ventilating, and Air Conditioning (HVAC) arrangement for a building, the HVAC arrangement comprising

an Air Handling Unit (AHU) loop with at least one AHU, with at least one electric chilled water pump, and with at least one electric AHU fan for supplying air to the building from the AHU, wherein cooling water is circulating in the AHU loop,

a cooling tower loop with at least two cooling towers, each cooling tower comprising at least one electric cooling tower fan, and with at least one electric condenser water pump, wherein condenser water is circulating in the cooling tower loop,

at least one chiller, the chiller comprising an evaporator, an electric compressor, a condenser, an expansion valve, and a refrigerant, which form a thermodynamic refrigeration cycle which interconnects with the AHU loop and with the cooling tower loop such that heat is transferred from the cooling water to the condenser water, and

a Master Controller (MC) for controlling the at least one electric chilled water pump, the least one electric AHU fan, the at least one electric cooling tower fan, and the at least one electric condenser water pump, the method comprising

the MC changing speed of the at least one electric chilled water pump such that a return chilled water temperature does not exceed a predetermined upper limit of return chilled water temperature and such that a delta T value of the chilled water does not exceed a predetermined thermal comfort delta T limit,

the MC changing speed of the at least one electric condenser water pump such that a return condenser water temperature does not exceed a predetermined upper limit of return condenser water temperature and such that a delta T value of the condenser water does not exceed a predetermined delta T limit, and

the MC selecting a number of active cooling towers with adjusting speed of their respective cooling tower fan,

wherein the aforementioned steps are provided in a balanced state of heat transport rate from the AHU to the cooling tower, and such that the same heat transport rate between the AHU and the chiller is maintained, while overall energy consumption is reduced.

2.  The method according to claim 1 further comprising removing water flow restrictions in the AHU loop by manually opening fully at least one water valve in the AHU loop with the MC reducing the speed of the at least one electric chilled water pump.

3.  The method according to claim 1 or 2 further comprising removing water flow restrictions in the cooling tower loop by manually opening fully at least one water valve in the cooling tower loop with the MC reducing the speed of the at least one electric condenser water pump.

4.  The method according to any one of the above-mentioned claims further comprising
    the MC adjusting a position of a water valve of the AHU for changing flow rate of water in the AHU with adjusting speed of the at least one electric AHU fan to provide a desired user thermal comfort with reduced energy consumption.

5.  The method according to any one of the above-mentioned claims further comprising
    the MC selecting a number of active electric chilled water pumps with adjusting their respective speed.

6.  The method according to any one of the above-mentioned claims further comprising
    the MC selecting a number of active electric condenser water pumps with adjusting their respective speed.

7.  The method according to any one of the above-mentioned claims further comprising
    the MC adjusting speed of the cooling tower fan depending on ambient conditions, to change supply condenser water temperature, for reducing total energy consumption of the cooling tower fan and of the electric compressor in the chiller.

8.  The method according to any one of the above-mentioned claims, wherein
    the at least one electric chilled water pump, the least one electric AHU fan, the at least one electric cooling tower fan, and the at least one electric condenser water pump are operated within predetermined boundary conditions.

9.  A Master Controller (MC) for operating a Heating, Ventilating, and Air Conditioning (HVAC) arrangement for a building, wherein the MC comprises interfaces

    - for at least one electric chilled water pump and for at least one electric Air Handling Unit (AHU) fan of an AHU loop of the HVAC arrangement, and
    - for at least one electric cooling tower fan and for at least one electric condenser water pump of a cooling tower loop of the HVAC arrangement,
wherein the MC is adapted to issue control signals to the interfaces for controlling the at least one electric chilled water pump, the at least one electric AHU fan, the at least one electric cooling tower fan, and the at least one electric condenser water pump, and
wherein the MC is adapted to perform automatically steps of a method according to claim 1
such that the aforementioned steps provide a balanced state of heat transport rate from a AHU to a cooling tower of the HVAC arrangement, and such that the same heat transport rate between the AHU and a chiller is maintained, while overall energy consumption is reduced.

**10.** The MC according to claim 9, wherein
at least two electric chilled water pumps are provided.

**11.** The MC according to claim 9 or 10, wherein
at least two electric condenser water pumps are provided.

**Patentansprüche**

**1.** Verfahren zum Betreiben einer Heizungs-, Lüftungs- und Klimatisierungs- (HVAC) Anlage für ein Gebäude, die HVAC-Anlage umfassend

einen Luftbehandlungseinheit- (AHU) Kreislauf mit mindestens einer AHU, mit mindestens einer elektrischen Kaltwasserpumpe und mit mindestens einem elektrischen AHU-Ventilator zur Versorgung des Gebäudes mit Luft aus der AHU, wobei Kühlwasser in dem AHU-Kreislauf zirkuliert,
einen Kühlturmkreislauf mit mindestens zwei Kühltürmen, wobei jeder Kühlturm mindestens einen elektrischen Kühlturmventilator aufweist, und mit mindestens einer elektrischen Kondensatwasserpumpe, wobei Kondensatwasser in dem Kühlturmkreislauf zirkuliert,
mindestens eine Kältemaschine, wobei die Kältemaschine einen Verdampfer, einen elektrischen Kompressor, einen Verflüssiger, ein Expansionsventil und ein Kältemittel aufweist, die einen thermodynamischen Kühlkreislauf bilden, der mit dem AHU-Kreislauf und dem Kühlturmkreislauf verbunden ist, so dass Wärme von dem Kühlwasser zu dem Kondensatwasser übertragen wird, und
ein Hauptsteuergerät (MC) zum Steuern der mindestens einen elektrischen Kaltwasserpumpe, des mindestens einen elektrischen AHU-Ventilators, des mindestens einen elektrischen Kühlturmventilators und der mindestens einen elektrischen Kondensatwasserpumpe, das Verfahren umfassend

Ändern einer Drehzahl der mindestens einen elektrischen Kaltwasserpumpe durch das MC so, dass eine Rücklauf-Kaltwassertemperatur eine vorbestimmte Obergrenze einer Rücklauf-Kaltwassertemperatur nicht überschreitet und so, dass ein Delta-T-Wert des Kaltwassers eine vorbestimmte Delta-T-Grenze für thermischen Komfort nicht überschreitet,
Ändern einer Drehzahl der mindestens einen elektrischen Kondensatwasserpumpe durch das MC so, dass eine Rücklauf-Kondensatwassertemperatur eine vorbestimmte Obergrenze einer Rücklauf-Kondensatwassertemperatur nicht überschreitet und so, dass ein Delta-T-Wert des Kondensatwassers eine vorbestimmte Delta-T-Grenze nicht überschreitet, und das MC wählt eine Anzahl aktiver Kühltürme aus, wobei eine Drehzahl ihres jeweiligen Kühlturmventilators angepasst wird,

wobei die vorgenannten Schritte in einem ausgeglichenen Zustand einer Wärmetransportrate von der AHU zu dem Kühlturm erfolgen, und so, dass die gleiche Wärmetransportrate zwischen der AHU und der Kältemaschine beibehalten wird, während ein Gesamtenergieverbrauch reduziert wird.

**2.** Verfahren nach Anspruch 1, weiterhin umfassend
ein Beseitigen von Wasserdurchflussbeschränkungen in dem AHU-Kreislauf durch manuelles vollständiges Öffnen mindestens eines Wasserventils in dem AHU-Kreislauf, wobei das MC die Drehzahl der mindestens einen elektrischen Kaltwasserpumpe verringert.

**3.** Verfahren nach Anspruch 1 oder 2, weiterhin umfassend
ein Beseitigen von Wasserdurchflussbeschränkungen in dem Kühlturmkreislauf durch manuelles vollständiges Öffnen mindestens eines Wasserventils in dem Kühlturmkreislauf, wobei das MC die Drehzahl der mindestens einen elektrischen Kondensatwasserpumpe verringert.

**4.** Verfahren nach einem der vorhergehenden Ansprüche, weiterhin umfassend
ein Anpassen einer Position eines Wasserventils der AHU an durch das MC, um eine Durchflussrate von Wasser in der AHU zu ändern mit einem Anpassen einer Geschwindigkeit des mindestens einen elektrischen AHU-Ventilators, um einen gewünschten thermischen Komfort für einen Benutzer mit reduziertem Energieverbrauch bereitzustellen.

**5.** Verfahren nach einem der vorhergehenden Ansprüche, weiterhin umfassend
Auswählen einer Anzahl aktiver elektrischer Kaltwasserpumpen durch das MC, wobei deren jeweilige Drehzahl angepasst wird.

**6.** Verfahren nach einem der vorhergehenden Ansprüche, weiterhin umfassend
Auswählen einer Anzahl aktiver elektrischer Kondensatwasserpumpen durch das MC, wobei deren jeweilige Drehzahl angepasst wird.

**7.** Verfahren nach einem der vorhergehenden Ansprüche, weiterhin umfassend
Anpassen einer Drehzahl des Kühlturmventilators in Abhängigkeit von Umgebungsbedingungen durch das MC, um eine Temperatur von Versorgungs-Kondensatwasser zu ändern und den Gesamtenergieverbrauch des Kühlturmventilators und des elektrischen Kompressors in der Kältemaschine zu verringern.

**8.** Verfahren nach einem der vorhergehenden Ansprüche, wobei die mindestens eine elektrische Kaltwasserpumpe, der mindestens eine elektrische AHU-Ventilator, der mindestens eine elektrische Kühlturmventilator und die mindestens eine elektrische Kondensatwasserpumpe innerhalb vorgegebener Randbedingungen betrieben werden.

**9.** Hauptsteuergerät (MC) zum Betreiben einer Heizungs-, Lüftungs- und Klimatisierungs- (HVAC) Anlage für ein Gebäude, wobei das MC Schnittstellen umfasst

- für mindestens eine elektrische Kaltwasserpumpe und für mindestens einen elektrischen Luftbehandlungseinheit-(AHU) Ventilator eines AHU-Kreislaufs der HVAC-Anlage, und
- für mindestens einen elektrischen Kühlturmventilator und für mindestens eine elektrische Kondensatwasserpumpe eines Kühlturmkreislaufs der HVAC-Anlage,
wobei das MC ausgebildet ist, Steuersignale an die Schnittstellen zum Steuern der mindestens einen elektrischen Kaltwasserpumpe, des mindestens einen elektrischen AHU-Ventilators, des mindestens einen elektrischen Kühlturmventilators und der mindestens einen elektrischen Kondensatwasserpumpe auszugeben, und
wobei das MC ausgebildet ist, automatisch Schritte eines Verfahrens nach Anspruch 1 durchzuführen,
so dass die vorgenannten Schritte einen ausgeglichenen Zustand einer Wärmetransportrate von einer AHU zu einem Kühlturm der HVAC-Anlage vorsehen, und so, dass die gleiche Wärmetransportrate zwischen der AHU und einer Kältemaschine beibehalten wird, während ein Gesamtenergieverbrauch reduziert wird.

**10.** MC nach Anspruch 9, wobei
mindestens zwei elektrische Kaltwasserpumpen vorgesehen sind.

**11.** MC nach Anspruch 9 oder 10, wobei
mindestens zwei elektrische Kondensatwasserpumpen vorgesehen sind.

**Revendications**

**1.** Procédé pour faire fonctionner un système de chauffage, de ventilation et de climatisation (HVAC) pour un bâtiment, le système HVAC comprenant

une boucle de dispositif de traitement d'air (AHU) avec au moins un AHU, avec au moins une pompe électrique à eau réfrigérée et avec au moins un ventilateur électrique d'AHU pour fournir de l'air au bâtiment à partir de l'AHU, dans lequel de l'eau de refroidissement circule dans la boucle d'AHU,
une boucle de tour de refroidissement avec au moins deux tours de refroidissement, chaque tour de refroidissement comprenant au moins un ventilateur électrique de tour de refroidissement et avec au moins une pompe électrique à eau de condensation, dans lequel de l'eau de condensation circule dans la boucle de tour de refroidissement,
au moins un refroidisseur, le refroidisseur comprenant un évaporateur, un compresseur électrique, un condenseur, une vanne d'expansion et un réfrigérant, qui forment un cycle de réfrigération thermodynamique relié à la boucle d'AHU et à la boucle de tour de refroidissement, de sorte que de la chaleur est transférée de l'eau de refroidissement à l'eau de condensation, et
un contrôleur principal (MC) pour commander l'au moins une pompe électrique à eau réfrigérée, l'au moins un ventilateur électrique d'AHU, l'au moins un ventilateur électrique de tour de refroidissement et l'au moins une pompe électrique à eau de condensation, le procédé comprenant :

le MC modifie une vitesse de l'au moins une pompe électrique à eau réfrigérée de sorte qu'une température d'eau réfrigérée de retour ne dépasse pas une limite supérieure prédéterminée d'une température d'eau glacée de retour et de sorte qu'une valeur delta T de l'eau glacée ne dépasse pas une limite delta T de confort thermique prédéterminée,
le MC modifie une vitesse de l'au moins une pompe électrique à eau de condensation de sorte qu'une température d'eau de condensation de retour ne dépasse pas une limite supérieure prédéterminée d'une température d'eau de condensation de retour et de sorte qu'une valeur delta T de l'eau de condensation ne dépasse pas une limite delta T prédéterminée, et
le MC sélectionne un nombre de tours de refroidissement actives en ajustant une vitesse de leur ventilateur de tour de refroidissement respectif,

dans lequel les étapes susmentionnées sont réalisées dans un état d'équilibre d'un taux de transport de chaleur de l'AHU à la tour de refroidissement, et de sorte que le même taux de transport de chaleur entre l'AHU et le refroidisseur est maintenu, tout en réduisant une consommation globale d'énergie.

2. Procédé selon la revendication 1, comprenant en outre :
supprimer des restrictions de débit d'eau dans la boucle d'AHU en ouvrant manuellement et complètement au moins une vanne d'eau dans la boucle d'AHU, le MC réduisant la vitesse de l'au moins une pompe électrique à eau réfrigérée.

3. Procédé selon la revendication 1 ou 2, comprenant en outre :
supprimer des restrictions de débit d'eau dans la boucle de tour de refroidissement en ouvrant manuellement et complètement au moins une vanne d'eau dans la boucle de tour de refroidissement, le MC réduisant la vitesse de l'au moins une pompe électrique à eau de condensation.

4. Procédé selon l'une des revendications précédentes, comprenant en outre :
le MC ajuste une position d'une vanne d'eau de l'AHU pour modifier un débit d'eau dans l'AHU en ajustant une vitesse de l'au moins un ventilateur électrique d'AHU afin d'assurer un confort thermique souhaité par un utilisateur tout en réduisant une consommation d'énergie.

5. Procédé selon l'une des revendications précédentes, comprenant en outre :
le MC sélectionne un nombre de pompes électriques actives à eau réfrigérée et ajuste leur vitesse respective.

6. Procédé selon l'une des revendications précédentes, comprenant en outre :
le MC sélectionne un nombre de pompes électriques actives à eau de condensation et ajuste leur vitesse respective.

7. Procédé selon l'une des revendications précédentes, comprenant en outre :
le MC ajuste une vitesse du ventilateur de tour de refroidissement en fonction des conditions ambiantes, pour modifier une température d'eau de condensation d'alimentation, afin de réduire une consommation totale d'énergie du ventilateur de tour de refroidissement et du compresseur électrique du refroidisseur.

8. Procédé selon l'une des revendications précédentes, dans lequel
l'au moins une pompe électrique à eau réfrigérée, l'au moins un ventilateur électrique d'AHU, l'au moins un ventilateur électrique de tour de refroidissement et l'au moins une pompe électrique à eau de condensation fonctionnent dans des conditions limites prédéterminées.

9. Contrôleur principal (MC) pour faire fonctionner un système de chauffage, de ventilation et de climatisation (HVAC) pour un bâtiment, dans lequel le MC comprend des interfaces

- pour au moins une pompe électrique à eau réfrigérée et pour au moins un ventilateur électrique de dispositif de traitement d'air (AHU) d'une boucle d'AHU du système HVAC, et
- pour au moins un ventilateur électrique de tour de refroidissement et pour au moins une pompe électrique à eau de condensation d'une boucle de tour de refroidissement du système HVAC,

dans lequel le MC est adapté pour émettre des signaux de commande vers les interfaces afin de commander l'au moins une pompe électrique à eau réfrigérée, l'au moins un ventilateur électrique d'AHU, l'au moins un ventilateur électrique de tour de refroidissement et l'au moins une pompe électrique à eau de condensation, et

dans lequel le MC est adapté pour exécuter automatiquement des étapes d'un procédé selon la revendication 1, de sorte que les étapes susmentionnées permettent un état d'équilibre d'un taux de transport de chaleur d'un AHU à une tour de refroidissement du système HVAC, et de sorte que le même taux de transport de chaleur entre l'AHU et un refroidisseur est maintenu, tout en réduisant une consommation globale d'énergie.

10. MC selon la revendication 9, dans lequel au moins deux pompes électriques à eau réfrigérée sont prévues.

11. MC selon la revendication 9 ou 10, dans lequel au moins deux pompes électriques à eau de condensation sont prévues.

FIG. 1

FIG. 2

FIG. 3

FIG. 4

FIG. 5

FIG. 6

500

```
┌─────────────────────────────────────┐
│   providing parameter boundary data  │ ──── 510
└─────────────────────────────────────┘
                  │
                  ▼
┌─────────────────────────────────────┐
│      measuring water flow rate       │ ──── 512
└─────────────────────────────────────┘
                  │
                  ▼
┌─────────────────────────────────────┐
│      fully opening the water valves  │ ──── 515
└─────────────────────────────────────┘
                  │
                  ▼
┌─────────────────────────────────────┐
│      measuring water flow rate       │ ──── 525
└─────────────────────────────────────┘
                  │
                  ▼
┌─────────────────────────────────────┐
│ determining pulse width of power connected to │ ──── 530
│              the pump                │
└─────────────────────────────────────┘
                  │
                  ▼
┌─────────────────────────────────────┐
│      changing pulse width of power   │ ──── 540
│        connected to the pump         │
└─────────────────────────────────────┘
                  │
                  ▼
┌─────────────────────────────────────┐
│    changing number of operating water │ ──── 550
│               pump                   │
└─────────────────────────────────────┘
                  │
                  ▼
┌─────────────────────────────────────┐
│     Checking data using statistical  │ ──── 560
│             techniques               │
└─────────────────────────────────────┘
```

FIG. 7

FIG. 8

EP 3 485 202 B1

FIG. 9

800

| Actions by MC | * |
| --- | --- |

| Impact on the system | ○ |
| --- | --- |

| Changes in Ambient | □ |
| --- | --- |

Increase in Room Temperature=increase in cooling load  ○

AHU Strategy 5 is activated to decide on optimal Air Flow and supply air temperature  — S1

Increase in chilled water return temperature and decrease in pressure  ○

Strategy 3 is activated to increase water flow to deliver the needed flow to meet chilled water return temperature and pressure requirements  — S2

Strategy 2 is activated to decide the optimal number of chilled water pumps for the given flow  — S3

Increase in cooling load transported by chilled water will increase the need of heat rejection (removing the heat from the room as well as the heat generated by chiller)  ○

Strategy 3 is activated to decide on optimal increased condenser water flow  — S4

Strategy 2 is activated to decide on optimal number of condenser water pumps  — S5

Strategy 4 is activated to decide on optimal number of cooling towers (potentially increase)  — S6

Strategy 6 is activated to decide on the optimal speed of cooling tower fans  — S7

| Increase in temperature and humidity | □ |
| --- | --- |

FIG. 10

**REFERENCES CITED IN THE DESCRIPTION**

**Patent documents cited in the description**

- US 8660702 B2
- US 20120271462 A1
- WO 2010051466 A1
- US 6085532 A
- US 2011137468 A1